# EUROPEAN PATENT SPECIFICATION

(11) **EP 2 963 358 B1**
(45) Date of publication and mention of the grant of the patent: **08.03.2023**
(21) Application number: 13875811.5
(22) Date of filing: 25.02.2013
(51) Int. Cl.: F25B 1/00, F16K 11/085, F24F 5/00, F25B 29/00, F16K 11/06, F24F 1/32, F24F 3/06, F25B 13/00, F25B 25/00, F25B 49/02

(54) **AIR CONDITIONER**
KLIMAANLAGE
CLIMATISEUR

(43) Date of publication of application: 06.01.2016
(73) Proprietor: Mitsubishi Electric Corporation, Tokyo 100-8310 (JP)
(72) Inventor: MOTOMURA, Yuji, Tokyo 100-8310 (JP); SHIMAMOTO, Daisuke, Tokyo 100-8310 (JP); HONDA, Takayoshi, Tokyo 100-8310 (JP); MORIMOTO, Osamu, Tokyo 100-8310 (JP); NISHIOKA, Koji, Tokyo 102-0073 (JP); ONO, Tatsuo, Tokyo 1008310 (JP)
(74) Representative: Pfenning, Meinig & Partner mbB
(86) International application number: PCT/JP2013/054751
(87) International publication number: WO 2014/128961

(56) References cited:
- WO-A1-2010/119555
- WO-A1-2012/172613
- CN-A- 1 242 485
- JP-A- 2002 221 375
- JP-A- 2006 307 519
- JP-A- 2006 322 595
- JP-U- S5 183 932
- US-A1- 2012 031 130
- US-B1- 6 684 651

## Description

### Technical Field

The present invention relates to an air-conditioning apparatus to be applied to, for example, a multi-air-conditioning apparatus for a building.

### Background Art

Hitherto, there exists an air-conditioning apparatus including a relay unit independently of an outdoor unit and an indoor unit as an air-conditioning apparatus such as a multi-air-conditioning apparatus for a building (see, for example, Patent Literature 1). In the air-conditioning apparatus, heat source-side refrigerant is circulated between the outdoor unit and the relay unit to generate heating energy or cooling energy. Then, a heat medium such as water is circulated between the relay unit and the indoor unit. A heat exchanger arranged in the relay unit exchanges heat between the heat source-side refrigerant and the heat medium to heat or cool the heat medium, which is delivered to the indoor unit to heat or cool indoors. Further, in Patent Literature 1, in order to allow a plurality of indoor units to perform heating or cooling individually, heat medium flow switching devices for allowing and interrupting a flow of the heat medium to each of the indoor units are arranged in the relay unit so as to respectively correspond to the indoor units.

### Citation List

### Patent Literature

Patent Literature 1: International Patent WO10/049998A (page 3, Fig. 1, etc.)

### Summary of Invention

### Technical Problem

In Patent Literature 1, two heat medium flow switching devices are required to be arranged for each indoor unit so that a heating operation or a cooling operation can be individually selected for each of the indoor units. Therefore, when the number of connected indoor units increases, a space in which the heat medium flow switching devices are mounted and driving devices for driving the heat medium flow switching devices are correspondingly required. Thus, improvement is required in terms of space saving and energy saving.

As the number of heat medium flow switching devices increases, the probability of need for maintenance including replacement of the heat medium flow switching devices becomes higher, leading to reduced ease of maintenance. Therefore, a smaller number of heat medium flow switching devices is preferred. However, Patent Literature 1 does not discuss this point at all.

The present invention has been made to solve the problem described above, and has an object to provide an air-conditioning apparatus capable of saving space and energy, and further, improving ease of maintenance. US 2012/031130 A1 discloses an air-conditioning apparatus according to the preamble of claim 1. Solution to Problem

According to the present invention, there is provided an air-conditioning apparatus as defined in claim 1. It includes: a refrigerant circuit formed by connecting a compressor, a heat source-side heat exchanger, a plurality of expansion devices, and refrigerant-side passages in a plurality of intermediate heat exchangers by refrigerant pipes to allow heat source-side refrigerant to circulate therethrough; a plurality of heat medium circuits formed by connecting a plurality of pumps, a plurality of use-side heat exchangers, and heat medium-side passages in the plurality of intermediate heat exchangers by heat-medium pipes to allow a heat medium to circulate therethrough; a plurality of heat medium flow switching devices, which are provided correspondingly to each of the plurality of use-side heat exchangers, the plurality of heat medium flow switching devices to switch a passage for the heat medium by connecting the use-side heat exchangers to any one of the plurality of intermediate heat exchangers, the plurality of use-side heat exchangers being individually connected to any one of the plurality of intermediate heat exchangers to enable a heating operation or a cooling operation; and an integrated heat medium flow switching device formed by entirely or partially integrating the plurality of heat medium flow switching devices, the integrated heat medium flow switching device being provided for each of the plurality of use-side heat exchangers so that the integrated heat medium flow switching device is driven by a single driving device.

### Advantageous Effects of Invention

According to the present invention, the plurality of heat medium flow switching devices respectively corresponding to the plurality of use-side heat exchangers are entirely or partially integrated so that the thus obtained integrated heat medium flow switching device is driven by the single driving device. In this manner, driving devices, which are otherwise required separately for the plurality of heat medium flow switching devices, may be constructed as the shared common driving device. Therefore, the number of driving devices may be reduced to improve energy saving, space saving, and ease of maintenance.

### Brief Description of Drawings

[Fig. 1] Fig. 1 is a schematic diagram illustrating an example of installation of an air-conditioning apparatus 100 according to an embodiment of the present invention.
[Fig. 2] Fig. 2 is a schematic circuit configuration diagram illustrating an example of a circuit configuration of the air-conditioning apparatus 100 according to the embodiment of the present invention.
[Fig. 3] Fig. 3 is a refrigerant circuit diagram illustrating a flow of refrigerant in a heating only operation mode of the air-conditioning apparatus 100 according to the embodiment of the present invention.
[Fig. 4] Fig. 4 is a refrigerant circuit diagram illustrating the flow of the refrigerant in a cooling only operation mode of the air-conditioning apparatus 100.
[Fig. 5] Fig. 5 is a refrigerant circuit diagram illustrating the flow of the refrigerant in a heating main operation mode of the air-conditioning apparatus 100 according to the embodiment of the present invention.
[Fig. 6] Fig. 6 is a refrigerant circuit diagram illustrating the flow of the refrigerant in a cooling main operation mode of the air-conditioning apparatus 100 according to the embodiment of the present invention.
[Figs. 7] Figs. 7 are explanatory diagrams of integrated heat medium flow switching devices 40 provided in a relay unit 2 illustrated in Fig. 1.
[Fig. 8] Fig. 8 is a conceptual diagram illustrating a configuration of a valve body 44 illustrated in Figs. 7.
[Figs. 9] Figs. 9 are explanatory diagrams of a rotation stop position of the valve body 44 of the integrated heat medium flow switching device 40 and a flow of a heat medium in a state in which the integrated heat medium flow switching device 40 provided in the relay unit 2 illustrated in Fig. 1 is switched to an intermediate heat exchanger 25a side.
[Figs. 10] Figs. 10 are explanatory diagrams of the rotation stop position of the valve body 44 of the integrated heat medium flow switching device 40 and the flow of the heat medium in a state in which the integrated heat medium flow switching device 40 provided in the relay unit 2 illustrated in Fig. 1 is switched to an intermediate heat exchanger 25b side.
[Figs. 11] Figs. 11 are explanatory diagrams of the rotation stop position of the valve body 44 of the integrated heat medium flow switching device 40 and the flow of the heat medium in a case where an indoor unit 3 is separated from a heat medium circuit by the integrated heat medium flow switching device 40 provided in the relay unit 2 illustrated in Fig 1.
[Figs. 12] Figs. 12 are diagrams illustrating a modified example of the integrated heat-medium flow switching device according to the embodiment of the present invention.

### Description of Embodiments

Now, an embodiment of the present invention is described referring to the drawings.

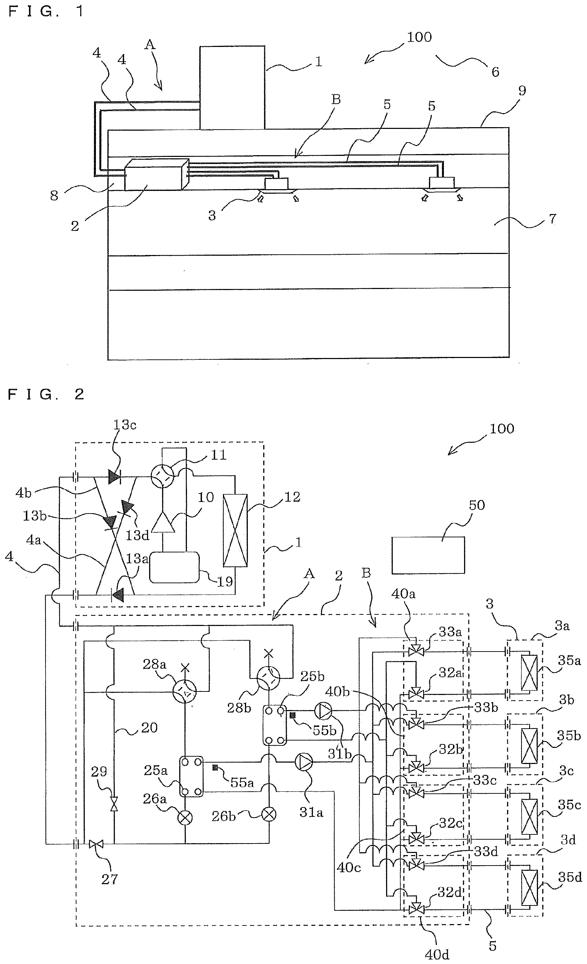

Fig. 1 is a schematic diagram illustrating an example of installation of an air-conditioning apparatus 100 according to an embodiment of the present invention. Referring to Fig. 1, the example of installation of the air-conditioning apparatus 100 is described. This air-conditioning apparatus 100 utilizes a refrigeration cycle (refrigerant circuit A, refrigerant circuit B) for circulating refrigerant (heat source-side refrigerant, heat medium), to thereby allow each indoor unit to freely select any one of a heating operation and a cooling operation. In Fig. 1, the entire air-conditioning apparatus 100 in which a plurality of indoor units 3 are connected is schematically illustrated. Note that, in the drawings referred to below including Fig. 1, the size relationship between components may be different from the reality in some cases. Further, in Fig. 1 and the drawings referred to below, the same or corresponding parts are represented by the same reference symbols, and the same applies hereinafter. Further, the forms of the constituent elements described herein are only examples and the present invention is not limited to the forms thus described.

In Fig. 1, the air-conditioning apparatus 100 according to this embodiment includes an outdoor unit (heat source apparatus) 1, the plurality of indoor units 3, and one relay unit 2 interposed between the outdoor unit 1 and the indoor units 3. The relay unit 2 exchanges heat between the heat source-side refrigerant and the heat medium. The outdoor unit 1 and the relay unit 2 are connected to each other by refrigerant pipes 4 through which the heat source-side refrigerant passes. The relay unit 2 and the indoor units 3 are connected by pipes (heat medium pipes) 5 through which the heat medium passes. Then, heating energy or cooling energy generated by the outdoor unit 1 is sent to the indoor units 3 through the relay unit 2.

The outdoor unit 1 is generally arranged in an outdoor space 6, which is a space outside of a construction 9 such as a building (for example, on a rooftop), and supplies the heating energy or cooling energy to the indoor units 3 through the relay unit 2. The indoor units 3 are arranged at positions at which heating air or cooling air can be supplied to an indoor space 7 as a space inside the construction 9 (for example, residential room), and supply the heating air or the cooling air to the indoor space 7 as an air-conditioned space. The relay unit 2 is configured so as to be installed at a position different from the outdoor space 6 and the indoor space 7 as a casing independent of the outdoor unit 1 and the indoor units 3. Then, the relay unit 2 transfers the heating energy or cooling energy supplied from the outdoor unit 1 to the indoor units 3.

An operation of the air-conditioning apparatus 100 according to the embodiment of the present invention is briefly described. The heat source-side refrigerant is delivered from the outdoor unit 1 to the relay unit 2 through the refrigerant pipes 4. The thus delivered heat source-side refrigerant exchanges heat with the heat medium circulating through the heat medium circuit B in intermediate heat exchangers (described later) included in the relay unit 2 to heat or cool the heat medium. Specifically, hot water or cold water is generated by the intermediate heat exchangers. The hot water or cold water generated by the relay unit 2 is delivered to the indoor unit 3, which is selected by a heat medium flow switching device (described later), by a heat medium delivery device (described later) through the heat-medium pipes 5 so as to be used in the indoor unit 3 for a heating operation or a cooling operation for the indoor space 7.

As the heat source-side refrigerant, there exist, for example, a single-component refrigerant such as R-22, R-134a, and R32, a near-azeotropic refrigerant mixture such as R-410A and R-404A, a zeotropic refrigerant mixture such as R-407C, and a refrigerant having a double bond in a chemical formula and having a relatively small value of a global warming potential such as CF₃CF=CH₂. As the heat source-side refrigerant, a mixture of the above-mentioned refrigerants may be used. Further, a natural refrigerant such as CO₂ and propane, which can be turned into a supercritical state, may be used as the heat source-side refrigerant.

On the other hand, as the heat medium, for example, brine (antifreezing solution) or water, a mixture of brine and water, and a mixture of water and an additive having a high anticorrosive effect can be used. Therefore, even when the heat medium leaks into the indoor space 7 through the indoor units 3 in the air-conditioning apparatus 100, the heat medium contributes to improvement of safety because of the use of the heat medium having high safety.

As illustrated in Fig. 1, in the air-conditioning apparatus 100 according to this embodiment, the outdoor unit 1 and the relay unit 2 are connected by using the two refrigerant pipes 4. Further, the relay unit 2 and each of the indoor units 3 are connected by using the two heat-medium pipes 5. Some of the air-conditioning apparatus 100, in which each of the indoor units can freely selectively operate, the heating operation or the cooling operation (for example, Japanese Unexamined Patent Application Publication No. Hei 05-280818, etc.) are air-conditioning apparatus in which the respective units (the outdoor unit 1, the indoor units 3, and the relay unit 2) are connected by four pipes. In the air-conditioning apparatus 100 according to this embodiment, however, the respective units (the outdoor unit 1, the indoor units 3, and the relay unit 2) are connected by two pipes. As a result, construction work is facilitated as compared with a related-art case where four pipes are used.

In Fig. 1, a state in which the relay unit 2 is installed in a space inside the construction 9, such as a space above a ceiling being a different space from the indoor space 7 (hereinafter referred to simply as "space 8"), is illustrated as an example. The relay unit 2 may also be installed in a shared space where an elevator is installed. Further, in Fig. 1, a case where the indoor unit 3 is a ceiling cassette type indoor unit is illustrated as an example, but the present invention is not limited thereto. Any types of the indoor unit such as a ceiling-concealed indoor unit or a ceiling-suspended indoor unit may be adopted. In other words, the indoor unit 3 may be of any type as long as heating air or cooling air can be blown into the indoor space 7 directly or through a duct or the like.

In Fig. 1, a case where the outdoor unit 1 is installed in the outdoor space 6 is illustrated as an example, but the present invention is not limited thereto. For example, the outdoor unit 1 may be installed in an enclosed space such as a machine room with a ventilation port, or may be installed inside the construction 9 as long as waste heat is exhaustible to the outside of the construction 9 through an exhaust duct. Further, even when a water-cooled outdoor unit 1 is adopted, the outdoor unit 1 may be installed inside the construction 9. No particular problem may arise even if the outdoor unit 1 is installed at such a place.

The relay unit 2 may be installed in the vicinity of the outdoor unit 1. However, note that, if a distance from the relay unit 2 to the indoor units 3 is too long, heat-medium delivery power is significantly increased to result in lowered energy saving effects. Further, the numbers of connected outdoor units 1, indoor units 3, and relay units 2 are not limited to those illustrated in Fig. 1. The numbers only need to be determined based on the construction 9, in which the air-conditioning apparatus 100 according to this embodiment is installed.

When a plurality of the relay units 2 are connected to the single outdoor unit 1, the plurality of relay units 2 can be installed to be spaced apart from each other in the shared space or the space above the ceiling in a construction such as a building. With the installation described above, an air conditioning load can be treated by the intermediate heat exchanger included in each of the relay units 2. Further, the indoor units 3 can be installed at a distance or a height within an allowable delivery range of pumps 31 to be described later in each of the relay units 2. As a result, the arrangement of the indoor units 3 in the whole construction such as the building is enabled.

Fig. 2 is a schematic circuit configuration diagram illustrating an example of a circuit configuration of the air-conditioning apparatus 100 according to the embodiment of the present invention. Referring to Fig. 2, a configuration of the air-conditioning apparatus 100, specifically, functions of each of actuators included in a refrigerant circuit are described in detail. As illustrated in Fig. 2, the outdoor unit 1 and the relay unit 2 are connected by the refrigerant pipes 4 through an intermediate heat exchanger (refrigerant-water heat exchanger) 25a and an intermediate heat exchanger (refrigerant-water heat exchanger) 25b included in the relay unit 2. Further, the relay unit 2 and the indoor units 3 are connected by the heat-medium pipes 5 through the intermediate heat exchanger 25a, the intermediate heat exchanger 25b, heat medium flow switching devices 32 (32a to 32d), and heat medium flow switching devices 33 (33a to 33d). The details of the refrigerant pipes 4 and the heat-medium pipes 5 are described later.

In Fig. 2, the heat medium flow switching devices 32 (32a to 32d) and the heat medium flow switching devices 33 (33a to 33d) are illustrated as separate devices. However, this illustration is to illustrate the functions of the refrigerant circuit of the air-conditioning apparatus 100. In terms of structure, a single integrated heat medium flow switching device 40 formed by integrating the heat medium flow switching device 32 (32a to 32d) and the heat medium flow switching device 33 (33a to 33d) is mounted.

The number of integrated heat medium flow switching devices 40 provided corresponds to the number of installed indoor units 3. In this case, the number of provided indoor units 3 is four, and hence four integrated heat medium flow switching devices 40 are mounted. In Fig. 2, an integrated heat medium flow switching device 40a, an integrated heat medium flow switching device 40b, an integrated heat medium flow switching device 40c, and an integrated heat medium flow switching device 40d are illustrated in the stated order from an upper side on the drawing sheet so as to correspond to the indoor units 3. This embodiment has a feature in the integrated heat medium flow switching devices 40. The details of the integrated heat medium flow switching devices 40 are specifically described later.

### [Outdoor Unit 1]

In the outdoor unit 1, a compressor 10, a first refrigerant flow switching device 11 such as a four-way valve, a heat source-side heat exchanger 12, and an accumulator 19 are mounted by a serial connection by the refrigerant pipes 4. Further, the outdoor unit 1 includes a refrigerant-use connection pipe 4a, a refrigerant-use connection pipe 4b, a check valve 13a, a check valve 13b, a check valve 13c, and a check valve 13d. By providing the refrigerant-use connection pipe 4a, the refrigerant-use connection pipe 4b, the check valve 13a, the check valve 13b, the check valve 13c, and the check valve 13d, a flow of the heat medium-side refrigerant into the relay unit 2 can be directed in a constant direction regardless of whether an operation required for the indoor units 3 is heating or cooling.

The compressor 10 sucks the heat source-side refrigerant, and compresses the heat source-side refrigerant into a high-temperature and high-pressure state to deliver the heat source-side refrigerant to the refrigerant circuit A. The compressor 10 only needs to be a capacity-controllable inverter compressor or the like, for example. The first refrigerant flow switching device 11 performs switching between a flow of the heat source-side refrigerant during a heating operation (in a heating only operation mode and a heating main operation mode to be described later) and a flow of the heat source-side refrigerant during a cooling operation (in a cooling only operation mode and a cooling main operation mode to be described later).

The heat source-side heat exchanger 12 functions as an evaporator during the heating operation and functions as a condenser (or a radiator) during the cooling operation. The heat source-side heat exchanger 12 exchanges heat between a fluid of air supplied from an air-sending device such as a fan (not shown) and the heat source-side refrigerant, and evaporates and gasifies or condenses and liquefies the heat source-side refrigerant. The accumulator 19 is arranged on a suction side of the compressor 10, and accumulates therein surplus refrigerant generated due to a difference between the heating operation and the cooling operation or surplus refrigerant due to a transient change in operation.

The check valve 13c is provided to the refrigerant pipe 4 between the relay unit 2 and the first refrigerant flow switching device 11, and allows the flow of the heat source-side refrigerant only in a predetermined direction (direction from the relay unit 2 to the outdoor unit 1). The check valve 13a is provided to the refrigerant pipe 4 between the heat source-side heat exchanger 12 and the relay unit 2, and allows the flow of the heat source-side refrigerant only in a predetermined direction (direction from the outdoor unit 1 to the relay unit 2). The check valve 13d is provided to the refrigerant-use connection pipe 4a, and controls the heat source-side refrigerant discharged from the compressor 10 to flow through the relay unit 2 during the heating operation. The check valve 13b is provided to the refrigerant-use connection pipe 4b, and controls the heat source-side refrigerant returned from the relay unit 2 to flow to the suction side of the compressor 10 during the heating operation.

The refrigerant-use connection pipe 4a connects the refrigerant pipe 4 between the first refrigerant flow switching device 11 and the check valve 13c and the refrigerant pipe 4 between the check valve 13a and the relay unit 2 in the outdoor unit 1. The refrigerant-use connection pipe 4b connects the refrigerant pipe 4 between the check valve 13c and the relay unit 2 and the refrigerant pipe 4 between the heat source-side heat exchanger 12 and the check valve 13a in the outdoor unit 1. In Fig. 2, a case where the refrigerant-use connection pipe 4a, the refrigerant-use connection pipe 4b, the check valve 13a, the check valve 13b, the check valve 13c, and the check valve 13d are provided is illustrated as an example. However, the configuration is not limited thereto. The above-mentioned components are not necessarily required to be provided.

### [Indoor Units 3]

In each of the indoor units 3, a use-side heat exchanger 35 is mounted. The use-side heat exchanger 35 is connected to the heat medium flow switching device 32 and the heat medium flow switching device 33 included in the relay unit 2 by the heat-medium pipes 5. The use-side heat exchanger 35 exchanges heat between the air supplied from the air-sending device such as the fan (not shown) and the heat medium to generate heating air or cooling air to be supplied to the indoor space 7.

In Fig. 2, a case where the four indoor units 3 are connected to the relay unit 2 is illustrated as an example, and the indoor units are illustrated as an indoor unit 3a, an indoor unit 3b, an indoor unit 3c, and an indoor unit 3d in the stated order from the upper side on the drawing sheet. Correspondingly to the indoor units 3a to 3d, the use-side heat exchangers 35 are illustrated as a use-side heat exchanger 35a, a use-side heat exchanger 35b, a use-side heat exchanger 35c, and a use-side heat exchanger 35d in the stated order from the upper side on the drawing sheet. Similarly to Fig. 1, the number of indoor units 3 to be connected is not limited to four as illustrated in Fig. 2.

### [Relay Unit 2]

In the relay unit 2, two or more intermediate heat exchangers 25 (two, that is, the intermediate heat exchanger 25a and the intermediate heat exchanger 25b in this case), two expansion devices 26 (26a, 26b), two opening and closing devices (an opening and closing device 27 and an opening and closing device 29), two second refrigerant flow switching devices 28 (28a, 28b), pumps 31 (31a, 31b) that are two heat medium delivery devices (hereinafter referred to as "pumps"), and the four integrated heat medium flow switching devices 40 (40a to 40d) are mounted.

The two intermediate heat exchangers 25 (the intermediate heat exchanger 25a and the intermediate heat exchanger 25b) function as the condensers (radiators) when the heating energy is supplied to the indoor units 3 performing the heating operation. The two intermediate heat exchangers 25 (the intermediate heat exchanger 25a and the intermediate heat exchanger 25b) function as the evaporators when the cooling energy is supplied to the indoor units 3 performing the cooling operation. The two intermediate heat exchangers 25 exchange heat between the heat source-side refrigerant and the heat medium to transfer the heating energy or the cooling energy stored in the heat source-side refrigerant, which is generated in the outdoor unit 1, to the heat medium.

The intermediate heat exchanger 25a is arranged between the expansion device 26a and the second refrigerant flow switching device 28a in the refrigerant circuit A and serves to cool the heat medium in the cooling and heating mixed operation mode. Further, the intermediate heat exchanger 25b is arranged between the expansion device 26b and the second refrigerant flow switching device 28b in the refrigerant circuit A and serves to heat the heat medium in the cooling and heating mixed operation mode.

The two expansion devices 26 (the expansion device 26a and the expansion device 26b) function as pressure reducing valves or expansion valves, and decompress the heat source-side refrigerant to expand the heat source-side refrigerant. The expansion device 26a is arranged on an upstream side of the intermediate heat exchanger 25a in the flow of the heat source-side refrigerant during the cooling only operation. The expansion device 26b is arranged on an upstream side of the intermediate heat exchanger 25b in the flow of the heat source-side refrigerant during the cooling only operation. The two expansion devices 26 only need to be devices capable of variably controlling their opening degrees, such as electronic expansion valves.

The two opening and closing devices (the opening and closing device 27 and the opening and closing device 29) are each constructed of a solenoid valve capable of performing an opening and closing operation by energization, and open and close the refrigerant pipes 4. Specifically, the two opening and closing devices (the opening and closing device 27 and the opening and closing device 29) are controlled to be opened and closed based on the operation mode to switch a passage for the heat source-side refrigerant. The opening and closing device 27 is provided to the refrigerant pipe 4 (refrigerant pipe 4 located in the lowermost column on the drawing sheet of Fig. 2 among the refrigerant pipes 4 that connect the outdoor unit 1 and the relay unit 2), which is arranged on an inlet side for the heat source-side refrigerant. The opening and closing device 29 is provided to a pipe (bypass pipe 20) that connects the refrigerant pipe 4 on the inlet side for the heat source-side refrigerant and the refrigerant pipe 4 on an outlet side for the heat source-side refrigerant. The opening and closing device 27 and the opening and closing device 29 only need to be capable of switching the passage for the refrigerant. For example, electronic expansion valves capable of variably controlling their opening degrees may be used.

The two second refrigerant flow switching devices 28 (the second refrigerant flow switching device 28a and the second refrigerant flow switching device 28b) are constructed of, for example, four-way valves or the like, and switch the flow of the heat source-side refrigerant so that the intermediate heat exchangers 25 function as the condensers or the evaporators based on the operation mode. The second refrigerant flow switching device 28a is arranged on a downstream side of the intermediate heat exchanger 25a in the flow of the heat source-side refrigerant in the cooling only operation mode. The second refrigerant flow switching device 28b is arranged on a downstream side of the intermediate heat exchanger 25b in the flow of the heat source-side refrigerant in the cooling only operation mode.

The two pumps 31 (the pump 31a and the pump 31b) circulate the heat medium passing through the heat medium pipes 5 through the heat medium circuit B. The pump 31a is provided to the heat medium pipe 5 between the intermediate heat exchanger 25a and the integrated heat medium flow switching devices 40. The pump 31b is provided to the heat medium pipe 5 between the intermediate heat exchanger 25b and the integrated heat medium flow switching devices 40. The two pumps 31 only need to be, for example, capacity-controllable pumps so that a flow rate can be controlled based on the magnitude of loads in the indoor units 3.

The integrated heat medium flow switching devices 40 are arranged so as to respectively correspond to the indoor units 3 as described above and have a function of switching a destination of connection of the corresponding use-side heat exchanger 35 to the intermediate heat exchanger 25a or the intermediate heat exchanger 25b. Specifically, each of the integrated heat medium flow switching devices 40 opens an internal passage so that the passage for the heat medium is switched to the intermediate heat exchanger 25a side or the intermediate heat exchanger 25b side. The switching of the heat medium passages includes not only perfect switching from one to the other but also partial switching from one to the other.

Further, the integrated heat medium flow switching devices 40 also have a function of controlling an opening area of the passage to control the flow rate of the heat medium flowing through the heat medium pipes 5, thereby controlling the flow rate of the heat medium into the indoor units 3. The integrated heat medium flow switching devices 40 control the amount of heat medium flowing into the indoor units 3 based on a temperature of the heat medium flowing into the indoor units 3 and a temperature of the heat medium flowing out of the indoor units 3, thereby being capable of providing an optimal amount of heat medium suitable for an air conditioning load for the indoor space 7 to the indoor units 3.

When optimal control based on the optimal flow rate of the heat medium corresponding to the load is not required in the connected indoor units 3, the integrated heat medium flow switching devices 40 are not necessarily required to have the flow rate controlling function. Therefore, the integrated heat medium flow switching devices 40 only need to have at least the flow switching function. In the following description, however, the integrated heat medium flow switching devices 40 are described as having both the flow switching function and the flow rate controlling function.

When a load such as stop or thermostat-off is not required or the passage for the heat medium is desired to be interrupted for maintenance or the like in the indoor unit 3, the integrated heat medium flow switching device 40 can be fully closed to stop the supply of the heat medium to the indoor unit 3. Specifically, each of the integrated heat medium flow switching devices 40 also has a function of interrupting the internal passage to separate the corresponding use-side heat exchanger 35 from the heat medium circuit B.

The relay unit 2 further includes temperature sensors 55 (a temperature sensor 55a and a temperature sensor 55b) for detecting a temperature of the heat medium on an outlet side of the intermediate heat exchangers 25. Information detected by the temperature sensors 55 (temperature information) is sent to a controller 50 for collectively controlling the operation of the air-conditioning apparatus 100.

The controller 50 is a microcomputer or the like, and controls the entire air-conditioning apparatus 100 based on information detected by various detection units and a command from a remote controller. Specifically, the controller 50 controls driving frequency of the compressor 10, a rotation speed (including ON/OFF) of the air-sending device (not shown), switching of the first refrigerant flow switching device 11, driving frequency of the pumps 31, switching of the second refrigerant flow switching devices 28, an opening degree of the expansion devices 26, opening and closing of the opening and closing devices 27 and 29, control of driving devices 41 for the integrated heat medium flow switching devices 40 (switching of the passage for the heat medium and control of the heat medium flow rate in the indoor units 3), and the like. Further, the controller 50 executes each of the operation modes to be described later.

In Fig. 2, a configuration, in which the controller 50 is installed separately from the outdoor unit 1, the indoor units 3, and the relay unit 2 so as to be communicable to/from the units described above, is illustrated. However, the configuration is not limited thereto. For example, the controller 50 may be mounted in any one of the outdoor unit 1, the indoor units 3, and the relay unit 2, or the functions of the controller 50 may be provided to the outdoor unit 1, the indoor units 3, and the relay unit 2 in a distributed manner to perform cooperation processing through data communication.

The heat medium pipes 5 for allowing the heat medium to pass therethrough include those to be connected to the intermediate heat exchanger 25a and those to be connected to the intermediate heat exchanger 25b. The heat medium pipes 5 are split based on the number of indoor units 3 to be connected to the relay unit 2 (each being split into four in this case). The heat medium pipes 5 are connected to the integrated heat medium flow switching devices 40. By controlling the integrated heat medium flow switching devices 40, the heat medium can be switched to the flow from the intermediate heat exchanger 25a into the use-side heat exchangers 35 or the flow from the intermediate heat exchanger 25b into the use-side heat exchangers 35.

Then, in the air-conditioning apparatus 100, the compressor 10, the first refrigerant flow switching device 11, the heat source-side heat exchanger 12, the opening and closing device 27, the opening and closing device 29, the second refrigerant flow switching devices 28, the refrigerant passages in the intermediate heat exchangers 25, the expansion devices 26, and the accumulator 19 are connected by the refrigerant pipes 4 to form the refrigerant circuit A. Further, the heat medium passages in the intermediate heat exchangers 25, the pumps 31, the integrated heat medium flow switching devices 40, and the use-side heat exchangers 35 are connected by the heat medium pipes 5 to form the heat medium circuit B. Specifically, the plurality of use-side heat exchangers 35 are connected to each of the intermediate heat exchangers 25 in parallel to form the heat medium circuit B as a plurality of systems.

Thus, in the air-conditioning apparatus 100, the heat source-side refrigerant circulating through the refrigerant circuit A and the heat medium circulating through the heat medium circuit B exchange heat in the intermediate heat exchanger 25a and the intermediate heat exchanger 25b. By using the configuration described above, the air-conditioning apparatus 100 can realize an optimal heating operation or cooling operation suitable for the air conditioning load.

### [Operation Mode]

Each of the operation modes to be executed by the air-conditioning apparatus 100 is described. Based on an instruction from each of the indoor units 3, the air-conditioning apparatus 100 enables the indoor units 3 to perform the heating operation or the cooling operation. Specifically, the air-conditioning apparatus 100 enables all the indoor units 3 to perform the same operation and also enables each of the indoor units 3 to perform a different operation.

There are the following four operation modes to be executed by the air-conditioning apparatus 100. Now, each of the operation modes is described with the flows of the heat source-side refrigerant and the heat medium.
1. Heating only operation mode (mode in which all the driven indoor units 3 perform the heating operation)
2. Cooling only operation mode (mode in which all the driven indoor units 3 perform the cooling operation)
3. Heating main operation mode (cooling and heating mixed operation mode in which a heating load is larger than a cooling load)
4. Cooling main operation mode (cooling and heating mixed operation mode in which a cooling load is larger than a heating load)

### [Heating Only Operation Mode]

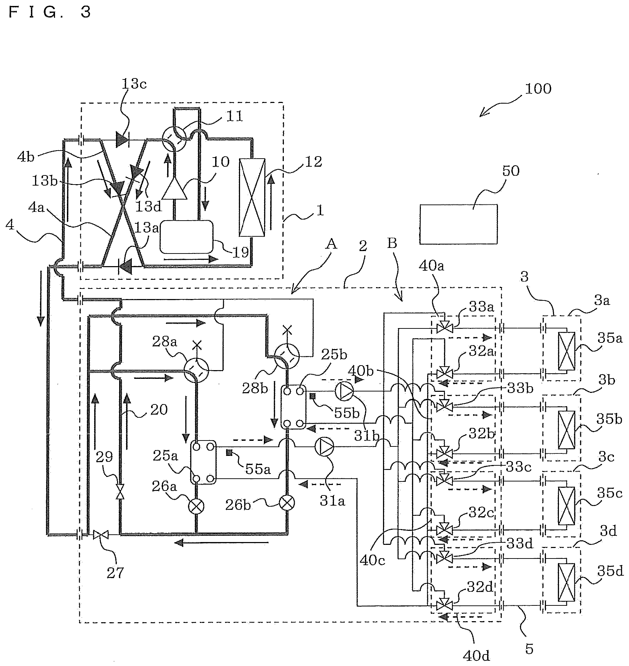

Fig. 3 is a refrigerant circuit diagram illustrating the flow of the refrigerant in the heating only operation mode of the air-conditioning apparatus 100 according to the embodiment of the present invention. In Fig. 3, the heating only operation mode is described taking as an example a case where all the use-side heat exchangers 35a to 35d perform the heating operation and a heating load is generated in all the use-side heat exchangers 35a to 35d. In Fig. 3, the pipes indicated by the thick lines are the pipes through which the heat source-side refrigerant flows. Further, in Fig. 3, the direction of the flow of the heat source-side refrigerant is indicated by the solid arrows, whereas the direction of the flow of the heat medium is indicated by the dashed arrows.

In the case of the heating only operation mode illustrated in Fig. 3, in the outdoor unit 1, the first refrigerant flow switching device 11 is switched so that the heat source-side refrigerant discharged from the compressor 10 flows into the relay unit 2 without passing through the heat source-side heat exchanger 12. In the relay unit 2, the pumps 31a and 31b are driven to open the heat medium flow switching devices 32a and 32d. The heat medium is circulated between each of the intermediate heat exchanger 25a and the intermediate heat exchanger 25b and the use-side heat exchangers 35a to 35d by opening the integrated heat medium flow switching devices 40a to 40d. Further, the second refrigerant flow switching device 28a and the second refrigerant flow switching device 28b are switched to a heating side (solid-line side in Fig. 2). As a result, the opening and closing device 27 is closed, whereas the opening and closing device 29 is opened.

First, the flow of the heat source-side refrigerant in the refrigerant circuit A is described.

Low-temperature and low-pressure refrigerant is compressed by the compressor 10 and discharged from the compressor 10 as high-temperature and high-pressure gas refrigerant. The high-temperature and high-pressure gas refrigerant discharged from the compressor 10 passes through the first refrigerant flow switching device 11 and then through the refrigerant-use connection pipe 4a and the check valve 13d to flow out of the outdoor unit 1. The high-temperature and high-pressure gas refrigerant flowing out of the outdoor unit 1 passes through the refrigerant pipe 4 to flow into the relay unit 2.

The high-temperature and high-pressure gas refrigerant flowing into the relay unit 2 is split and respectively passes through the second refrigerant flow switching device 28a and the second refrigerant flow switching device 28b. Then, the high-temperature and high-pressure gas refrigerant flows into the intermediate heat exchanger 25a and the intermediate heat exchanger 25b. The high-temperature and high-pressure gas refrigerant flowing into the intermediate heat exchanger 25a and the intermediate heat exchanger 25b is condensed and liquefied while rejecting heat to the heat medium circulating through the heat medium circuit B, and turns into high-pressure liquid refrigerant. The high-pressure liquid refrigerant flows out of the intermediate heat exchanger 25a and the intermediate heat exchanger 25b.

The liquid refrigerant flowing out of the intermediate heat exchanger 25a and the intermediate heat exchanger 25b is expanded by the expansion device 26a and the expansion device 26b to turn into low-temperature and low-pressure two-phase refrigerants. The two-phase refrigerants join together and then pass through the opening and closing device 29 to flow out of the relay unit 2. Then, the refrigerant flows into the outdoor unit 1 again through the refrigerant pipe 4. The refrigerant flowing into the outdoor unit 1 passes through the refrigerant-use connection pipe 4b and the check valve 13b to flow into the heat source-side heat exchanger 12 functioning as the evaporator.

Then, the heat source-side refrigerant flowing into the heat source-side heat exchanger 12 removes heat from the air in the outdoor space 6 (hereinafter referred to as "outside air") by the heat source-side heat exchanger 12 to turn into low-temperature and low-pressure gas refrigerant. The low-temperature and low-pressure gas refrigerant flowing out of the heat source-side heat exchanger 12 is sucked into the compressor 10 again through the first refrigerant flow switching device 11 and the accumulator 19.

At this time, the opening degree of the expansion device 26 is controlled by the controller 50 so that subcool (degree of subcooling) determined as a difference between a value determined by converting the pressure of the heat source-side refrigerant flowing between the intermediate heat exchanger 25 and the expansion device 26 into a saturation temperature and the temperature on the outlet side of the intermediate heat exchanger 25 becomes constant. Note that, when a temperature at an intermediate position in the intermediate heat exchangers 25 can be measured, the temperature at the intermediate position may be used in place of the converted saturation temperature. In this case, a pressure sensor is not required to be installed, and the system can be constructed at low cost.

Next, the flow of the heat medium in the heat medium circuit B is described.

In the heating only operation mode, the heating energy of the heat source-side refrigerant is transferred to the heat medium in both the intermediate heat exchanger 25a and the intermediate heat exchanger 25b. The heated heat medium is controlled to flow through the heat medium pipe 5 by the pump 31a and the pump 31b. The heat medium, which is pressurized by the pump 31a and the pump 31b, flows into the use-side heat exchangers 35a to 35d after the passage for the heat medium is switched by the integrated heat medium flow switching devices 40. At this time, it is desired to switch the passage so that a total heating capacity of the indoor units 3 in which the heating is performed by the heat medium passing through the intermediate heat exchanger 25a side and a total heating capacity of the indoor units 3 in which the heating is performed by the heat medium passing through the intermediate heat exchanger 25b side are approximately halved.

A capacity of heating by each of the indoor units 3 can be determined by, for example, the controller 50. Based on the heating capacity, the passage in the integrated heat medium flow switching device 40 is switched. In this case, each of the integrated heat medium flow switching devices 40 is switched so that, for example, the heat medium passing through the intermediate heat exchanger 25a side flows into the use-side heat exchangers 35c and 35d while the heat medium passing through the intermediate heat exchanger 25b side flows into the use-side heat exchangers 35a and 35b.

The heat medium flowing into the use-side heat exchangers 35a to 35d rejects heat to indoor air to heat the indoor space 7.

The heat medium then flows out of the use-side heat exchangers 35a to 35d to flow into the integrated heat medium flow switching devices 40a to 40d again. At this time, the integrated heat medium flow switching devices 40 are controlled so that the flow rate of the heat medium becomes a flow rate necessary to cover the air conditioning load that is required indoors. By the flow-rate controlling action in the integrated heat medium flow switching devices 40a to 40d, the controlled flow rate of the heat medium flows into the use-side heat exchangers 35a to 35d.

The heat medium flowing out of each of the integrated heat medium flow switching devices 40a to 40d flows into the intermediate heat exchanger 25a or the intermediate heat exchanger 25b to receive, from the refrigerant side, the amount of heat equal to the amount of heat rejected to the indoor space 7 through the indoor units 3, and is sucked into the pump 31a or the pump 31b again.

The integrated heat medium flow switching devices 40 control the flow rate of the heat medium flowing into the use-side heat exchangers 35 as described above. The integrated heat medium flow switching devices 40 are specifically controlled as follows. Specifically, the opening degree of the integrated heat medium flow switching device 40 is controlled so that a temperature difference between the temperature detected by the temperature sensor 55a or the temperature detected by the temperature sensor 55b and a temperature of the heat medium flowing out of the use-side heat exchanger 35 is kept to a target value. More specifically, when the temperature difference is larger than the target value, the integrated heat medium flow switching device 40 is controlled so that an opening area of the passage is narrowed. When the temperature difference is smaller than the target value, the integrated heat medium flow switching device 40 is controlled so that the opening area of the passage is enlarged.

By controlling the integrated heat medium flow switching devices 40 as described above, an optimal heat medium flow rate suitable for the air conditioning load for the indoor space 7 is enabled to flow into the use-side heat exchangers 35 so that the air conditioning load can be appropriately treated. As the outlet temperature of the intermediate heat exchanger 25, any of the temperatures obtained by the temperature sensor 55a and the temperature sensor 55b may be used, or an average temperature thereof may be used.

Meanwhile, the opening degree of the integrated heat medium flow switching devices 40 should be controlled based not on the temperature difference between the temperature detected by the temperature sensor 55a or 55b and the temperature of the heat medium flowing out of the use-side heat exchangers 35 but on a temperature difference between a temperature at an inlet and a temperature at an outlet of the use-side heat exchangers 35. However, the heat medium temperature on the inlet side of the use-side heat exchangers 35 is substantially the same temperature as the temperature detected by the temperature sensors 55. Therefore, the temperature on the inlet side of the use-side heat exchangers 35 can be substituted by the temperature detected by the temperature sensor 55 at the outlet of the intermediate heat exchanger 25 to which the use-side heat exchanger 35 is connected. By substituting the temperature detected by the temperature sensor 55 for the temperature on the inlet side of the use-side heat exchanger 35, the temperature sensors are not required to be arranged on the inlet side of the use-side heat exchangers 35. Thus, the number of temperature sensors can be reduced, and the system can be constructed at low cost.

The opening degree of the integrated heat medium flow switching devices 40 is controlled based on the temperature difference described above, but the opening degree of the integrated heat medium flow switching devices 40 may also be controlled based on the heat medium temperature at the outlet of the intermediate heat exchangers 25. In this case, the opening degree of the integrated heat medium flow switching devices 40 only needs to be controlled so that the heat medium temperature at the outlet of the intermediate heat exchangers 25 is kept to the target value.

When the heating only operation mode is executed, the heat medium is not required to be controlled to flow to the use-side heat exchangers 35 without a heating load (including a thermostat-off state). Therefore, the passages are closed by the integrated heat medium flow control devices 40 so that the heat medium does not flow to the use-side heat exchangers 35. In the above-mentioned example, the heat medium is controlled to flow through all the use-side heat exchangers 35a to 35d because of the presence of heating loads. When the heating load is no longer present, the corresponding integrated heat medium flow switching device 40 only needs to be fully closed. When the heating load is generated again, the corresponding integrated heat medium flow switching device 40 only needs to be opened to circulate the heat medium. This applies to the other operation modes to be described below.

### [Cooling Only Operation Mode]

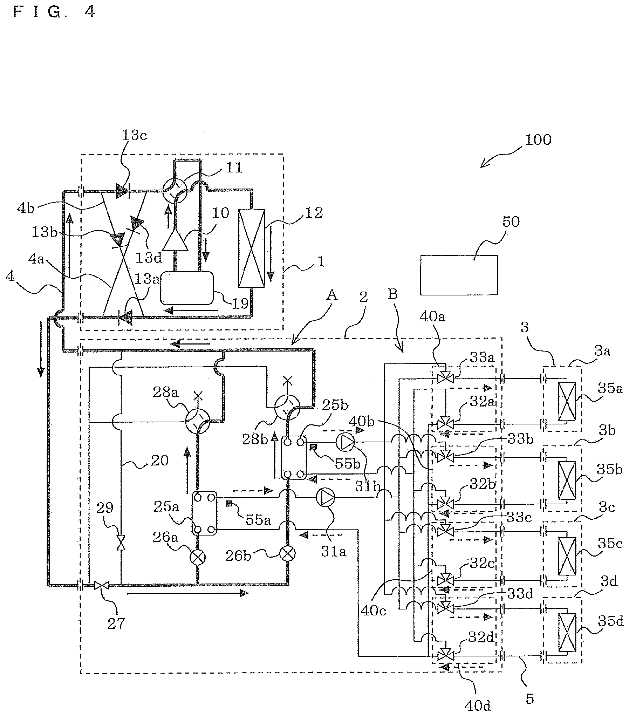

Fig. 4 is a refrigerant circuit diagram illustrating the flow of the refrigerant in the cooling only operation mode of the air-conditioning apparatus 100. Referring to Fig. 4, the cooling only operation mode is described taking as an example a case where all the use-side heat exchangers 35a to 35d perform the cooling operation and a cooling load is generated in all the use-side heat exchangers 35a to 35d. In Fig. 4, the direction of the flow of the heat source-side refrigerant is indicated by the solid arrows, whereas the direction of the flow of the heat medium is indicated by the dashed arrows.

In the case of the cooling only operation mode illustrated in Fig. 4, in the outdoor unit 1, the first refrigerant flow switching device 11 is switched so that the heat source-side refrigerant discharged from the compressor 10 flows into the heat source-side heat exchanger 12.

In the relay unit 2, the pump 31a and the pump 31b are driven to open the integrated heat medium flow switching devices 40. By opening the integrated heat medium flow switching devices 40, the heat medium is allowed to circulate between each of the intermediate heat exchanger 25a and the intermediate heat exchanger 25b and the use-side heat exchangers 35a to 35d. At this time, the integrated heat medium flow switching devices 40 are switched to the cooling side (dotted-line side in Fig. 2). The opening and closing device 27 is opened, whereas the opening and closing device 29 is closed.

First, the flow of the heat source-side refrigerant in the refrigerant circuit A is described.

Low-temperature and low-pressure refrigerant is compressed by the compressor 10 and discharged from the compressor 10 as high-temperature and high-pressure gas refrigerant. The high-temperature and high-pressure gas refrigerant discharged from the compressor 10 passes through the first refrigerant flow switching device 11 to flow into the heat source-side heat exchanger 12. The refrigerant flowing into the heat source-side heat exchanger 12 exchanges heat with the outside air to turn into high-temperature and high-pressure liquid or two-phase refrigerant, which then flows out of the heat source-side heat exchanger 12. After passing through the check valve 13a, the refrigerant flowing out of the heat source-side heat exchanger 12 flows out of the outdoor unit 1. The high-temperature and high-pressure liquid or two-phase refrigerant flowing out of the outdoor unit 1 passes through the refrigerant pipes 4 to flow into the relay unit 2.

The high-temperature and high-pressure liquid or two-phase refrigerant flowing into the relay unit 2 passes through the opening and closing device 27, and is then split and expanded by the expansion devices 26a and 26b to turn into low-temperature and low-pressure two-phase refrigerants. The two-phase refrigerants evaporate and gasify while removing heat from the heat medium circulating through the heat medium circuit B to turn into low-temperature gas refrigerants. The gas refrigerants flowing out of the intermediate heat exchangers 25a and 25b pass through the second refrigerant flow switching device 28a and the second refrigerant flow switching device 28b, and then join together and flow out of the relay unit 2. The refrigerant flowing out of the relay unit 2 passes through the refrigerant pipes 4 and the check valve 13c to be sucked into the compressor 10 again through the first refrigerant flow switching device 11 and the accumulator 19.

At this time, the opening degree of the expansion device 26 is controlled so that superheat (degree of superheat) determined as a difference between a value determined by converting the pressure of the heat source-side refrigerant flowing between the intermediate heat exchanger 25 and the expansion device 26 into a saturation temperature and the temperature on the outlet side of the intermediate heat exchanger 25 becomes constant. Note that, when a temperature at an intermediate position in the intermediate heat exchangers 25 can be measured, the temperature at the intermediate position may be used in place of the converted saturation temperature. In this case, a pressure sensor is not required to be installed, and the system can be constructed at low cost.

Next, the flow of the heat medium in the heat medium circuit B is described.

In the cooling only operation mode, the cooling energy of the heat medium is transferred to the heat source-side refrigerant in both the intermediate heat exchanger 25a and the intermediate heat exchanger 25b. The cooled heat medium is controlled to flow through the heat medium pipe 5 by the pump 31a and the pump 31b. The heat medium, which is pressurized by the pump 31a and the pump 31b, flows into the use-side heat exchangers 35a to 35d after the passage for the heat medium is switched by the integrated heat medium flow switching devices 40. At this time, it is desired to switch the passage so that a total cooling capacity of the indoor units 3 in which the cooling is performed by the heat medium passing through the intermediate heat exchanger 25a side and a total cooling capacity of the indoor units 3 in which the cooling is performed by the heat medium passing through the intermediate heat exchanger 25b side are approximately halved.

A capacity of cooling by each of the indoor units 3 can be determined by, for example, the controller 50. Based on the cooling capacity, the passage in the integrated heat medium flow switching device 40 is switched. In this case, each of the integrated heat medium flow switching devices 40 is switched so that, for example, the heat medium passing through the intermediate heat exchanger 25a side flows into the use-side heat exchangers 35c and 35d while the heat medium passing through the intermediate heat exchanger 25b side flows into the use-side heat exchangers 35a and 35b.

The heat medium flowing into the use-side heat exchangers 35a to 35d removes heat from indoor air to cool the indoor space 7.

The heat medium then flows out of the use-side heat exchangers 35a to 35d to flow into the integrated heat medium flow switching devices 40a to 40d again. At this time, the integrated heat medium flow switching devices 40 to 40d are controlled so that the flow rate of the heat medium becomes a flow rate necessary to cover the air conditioning load for the indoor space 7. By the flow-rate controlling action in the integrated heat medium flow switching devices 40a to 40d, the controlled flow rate of the heat medium flows into the use-side heat exchangers 35a to 35d.

The heat medium flowing out of each of the integrated heat medium flow switching devices 40a to 40d flows into the intermediate heat exchanger 25a or the intermediate heat exchanger 25b to transfer, to the refrigerant side, the amount of heat equal to the amount of heat removed from the indoor space 7 through the indoor units 3, and is sucked into the pump 31a or the pump 31b again.

The integrated heat medium flow switching devices 40 control the flow rate of the heat medium flowing into the use-side heat exchangers 35 as described above. The integrated heat medium flow switching devices 40 are specifically controlled as follows. Specifically, the opening degree of the integrated heat medium flow switching device 40 is controlled so that a temperature difference between the temperature detected by the temperature sensor 55a or the temperature detected by the temperature sensor 55b and a temperature of the heat medium flowing out of the use-side heat exchanger 35 is kept to a target value. More specifically, when the temperature difference is larger than the target value, the integrated heat medium flow switching device 40 is controlled so that an opening area of the passage is narrowed. When the temperature difference is smaller than the target value, the integrated heat medium flow switching device 40 is controlled so that the opening area of the passage is enlarged.

By controlling the integrated heat medium flow switching devices 40 as described above, an optimal heat medium flow rate suitable for the air conditioning load for the indoor space 7 is enabled to flow into the use-side heat exchangers 35 so that the air conditioning load can be appropriately treated. As the outlet temperature of the intermediate heat exchanger 25, any of the temperatures obtained by the temperature sensor 55a and the temperature sensor 55b may be used, or an average temperature thereof may be used.

Meanwhile, the opening degree of the integrated heat medium flow switching devices 40 should be controlled based not on the temperature difference between the temperature detected by the temperature sensor 55a or 55b and the temperature of the heat medium flowing out of the use-side heat exchangers 35 but on a temperature difference between a temperature at an inlet and a temperature at an outlet of the use-side heat exchangers 35. However, the heat medium temperature on the inlet side of the use-side heat exchangers 35 is substantially the same temperature as the temperature detected by the temperature sensors 55. Therefore, the temperature on the inlet side of the use-side heat exchangers 35 can be substituted by the temperature detected by the temperature sensor 55 at the outlet of the intermediate heat exchanger 25 to which the use-side heat exchanger 35 is connected. By substituting the temperature detected by the temperature sensor 55 for the temperature on the inlet side of the use-side heat exchanger 35, the temperature sensors are not required to be arranged on the inlet side of the use-side heat exchangers 35. Thus, the number of temperature sensors can be reduced, and the system can be constructed at low cost.

The opening degree of the integrated heat medium flow switching devices 40 is controlled based on the temperature difference described above, but the opening degree of the integrated heat medium flow switching devices 40 may also be controlled based on the heat medium temperature at the outlet of the intermediate heat exchangers 25. In this case, the opening degree of the integrated heat medium flow switching devices 40 only needs to be controlled so that the heat medium temperature at the outlet of the intermediate heat exchangers 25 is kept to the target value.

### [Mixed Operation Mode: Heating Main Operation]

Now, the heating main operation mode of a mixed operation, in which the heating load is generated in any of the use-side heat exchangers 35 and the cooling load is generated in the remaining use-side heat exchangers 35, is described.

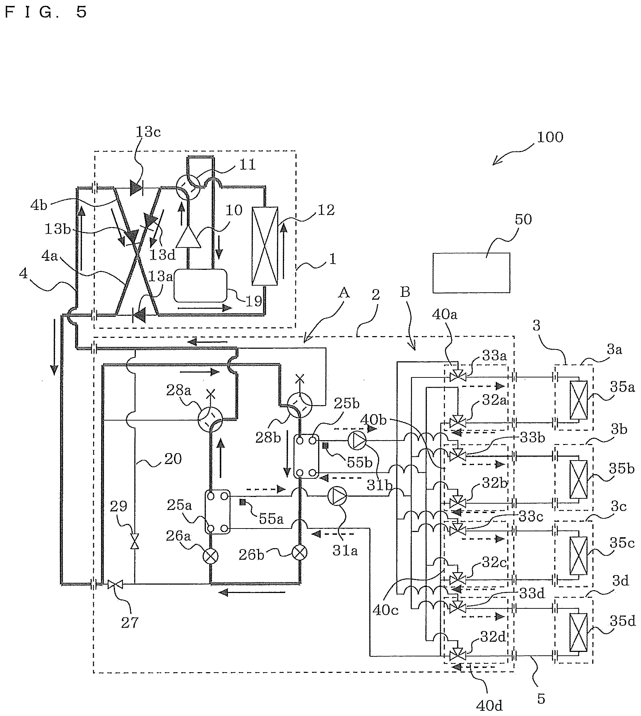

Fig. 5 is a refrigerant circuit diagram illustrating the flow of the refrigerant in the heating main operation mode of the air-conditioning apparatus 100 according to the embodiment of the present invention. The pipes indicated by the thick lines are the pipes through which the heat source-side refrigerant circulates. In Fig. 5, the direction of the flow of the heat source-side refrigerant is indicated by the solid arrows, whereas the direction of the flow of the heat medium is indicated by the dashed arrows.

The outline of differences between the heating main operation and the heating only operation is now first described. The expansion device 26a and the expansion device 26b are both controlled to function as expansion valves during the heating only operation, but one of the expansion devices 26a and 26b is fully opened and the other thereof is controlled to function as the expansion valve during the heating main operation. In this manner, both the intermediate heat exchanger 25a and the intermediate heat exchanger 25b function as the condensers during the heating only operation, whereas the intermediate heat exchanger 25b functions as the condenser and the intermediate heat exchanger 25a functions as the evaporator during the heating main operation.

In the case of the heating main operation mode illustrated in Fig. 5, in the outdoor unit 1, the first refrigerant flow switching device 11 is switched so that the heat source-side refrigerant discharged from the compressor 10 flows into the relay unit 2 without passing through the heat source-side heat exchanger 12. In the relay unit 2, the pump 31a and the pump 31b are driven to open the integrated heat medium flow switching devices 40a to 40d. By opening the integrated heat medium flow switching devices 40a to 40d, the heat medium circulates between the intermediate heat exchanger 25a and the use-side heat exchanger 35 in which the cooling load is generated. Further, the heat medium also circulates between the intermediate heat exchanger 25b and the use-side heat exchanger 35 in which the heating load is generated. The second refrigerant flow switching device 28a is switched to the cooling side (dotted-line side in Fig. 2), whereas the second refrigerant flow switching device 28b is switched to the heating side (solid-line side in Fig. 2). The expansion device 26a is fully opened, the opening and closing device 27 is closed, and the opening and closing device 29 is closed.

First, the flow of the heat source-side refrigerant in the refrigerant circuit A is described. The flow of the heat source-side refrigerant through the refrigerant circuit A in the heating main operation mode is the same as the flow of the heat source-side refrigerant through the refrigerant circuit A in the heating only operation mode described above. Specifically, the low-temperature and low-pressure refrigerant is compressed by the compressor 10 to be discharged as high-temperature and high-pressure gas refrigerant. The high-temperature and high-pressure gas refrigerant discharged from the compressor 10 passes through the first refrigerant flow switching device 11 and then through the refrigerant-use connection pipe 4a and the check valve 13d to flow out of the outdoor unit 1. The high-temperature and high-pressure gas refrigerant flowing out of the outdoor unit 1 passes through the refrigerant pipe 4 to flow into the relay unit 2. The high-temperature and high-pressure gas refrigerant flowing into the relay unit 2 passes through the second refrigerant flow switching device 28b to flow into the intermediate heat exchanger 25b functioning as the condenser.

The gas refrigerant flowing into the intermediate heat exchanger 25b is condensed and liquefied while rejecting heat to the heat medium circulating through the heat medium circuit B, and turns into liquid refrigerant. The liquid refrigerant flowing out of the intermediate heat exchanger 25b is expanded by the expansion device 26b to turn into low-pressure two-phase refrigerant. The low-pressure two-phase refrigerant flows into the intermediate heat exchanger 25a functioning as the evaporator through the fully opened expansion device 26a. The low-pressure two-phase refrigerant flowing into the intermediate heat exchanger 25a removes heat from the heat medium circulating through the heat medium circuit B to evaporate and cool the heat medium. The low-pressure two-phase refrigerant flows out of the intermediate heat exchanger 25a, and flows out of the relay unit 2 through the second refrigerant flow switching device 28a to flow into the outdoor unit 1 again through the refrigerant pipe 4.

The low-temperature and low-pressure two-phase refrigerant flowing into the outdoor unit 1 passes through the check valve 13b to flow into the heat source-side heat exchanger 12 functioning as the evaporator. Then, the refrigerant flowing into the heat source-side heat exchanger 12 removes heat from the outside air in the heat source-side heat exchanger 12 to turn into low-temperature and low-pressure gas refrigerant. The low-temperature and low-pressure gas refrigerant flowing out of the heat source-side heat exchanger 12 is sucked into the compressor 10 again through the first refrigerant flow switching device 11 and the accumulator 19.

At this time, the opening degree of the expansion device 26b is controlled so that subcool (degree of subcooling) of the refrigerant at the outlet of the intermediate heat exchanger 25b becomes a target value. The subcool may be controlled by the expansion device 26a while the expansion device 26b is fully opened. Note that, when the temperature at the intermediate position in the intermediate heat exchangers 25 can be measured, the temperature at the intermediate position may be used in place of the converted saturation temperature. In this case, a pressure sensor is not required to be installed, and the system can be constructed at low cost.

Next, the flow of the heat medium in the heat medium circuit B is described.

In the heating main operation mode, the heating energy of the heat source-side refrigerant is transferred to the heat medium in the intermediate heat exchanger 25b. The heated heat medium is controlled to flow through the heat medium pipe 5 by the pump 31b. Further, in the heating main operation mode, the cooling energy of the heat source-side refrigerant is transferred to the heat medium in the intermediate heat exchanger 25a. The cooled heat medium is controlled to flow through the heat medium pipe 5 by the pump 31a. The heated heat medium, which is pressurized by the pump 31b to flow out of the pump 31b, flows into the use-side heat exchanger 35 in which the heating load is generated, through the integrated heat medium flow switching devices 40. On the other hand, the cooled heat medium, which is pressurized by the pump 31a to flow out of the pump 31a, flows into the use-side heat exchanger 35 in which the cooling load is generated, through the integrated heat medium flow switching devices 40.

At this time, when the connected indoor unit 3 is performing the heating operation, the integrated heat medium flow switching device 40 is switched so that the connected indoor unit 3 forms the heat medium circuit B between the intermediate heat exchanger 25b functioning as the condenser and the pump 31b. When the connected indoor unit 3 is performing the cooling operation, the integrated heat medium flow switching device 40 is switched so that the connected indoor unit 3 forms the heat medium circuit B between the intermediate heat exchanger 25a functioning as the evaporator and the pump 31a. Specifically, the heat medium to be supplied to the indoor units 3 can be switched to function as a heating heat medium or cooling heat medium by the integrated heat medium flow switching devices 40.

In the use-side heat exchangers 35, the cooling operation for the indoor space 7 by heat removal by the heat medium from the indoor air or the heating operation for the indoor space 7 by heat rejection by the heat medium to the indoor air is performed. At this time, the heat medium flows into the use-side heat exchangers 35 after the flow rate of the heat medium is controlled to the flow rate necessary for covering the indoor air conditioning load by the functions of the integrated heat medium flow switching devices 40.

The heat medium, which is used for the heating operation and passes through the use-side heat exchangers 35 to have a slightly reduced temperature, passes through the integrated heat medium flow switching devices 40 to flow into the intermediate heat exchanger 25b. After the heat medium flowing into the intermediate heat exchanger 25b exchanges heat with the heat source-side refrigerant to be heated, the heat medium is sucked into the pump 31b again. The heat medium, which is used for the cooling operation and passes through the use-side heat exchangers 35 to have a slightly increased temperature, passes through the integrated heat medium flow switching devices 40 to flow into the intermediate heat exchanger 25a. After the heat medium flowing into the intermediate heat exchanger 25a exchanges heat with the heat source-side refrigerant to be cooled, the heat medium is sucked into the pump 31a again.

The heat medium heated by the intermediate heat exchanger 25b and the heat medium cooled by the intermediate heat exchanger 25a are introduced into the use-side heat exchangers 35 respectively having the heating load and the cooling load therein without being mixed in the relay unit 2 under the functions of the integrated heat medium flow switching devices 40.

The integrated heat medium flow switching devices 40 control the heat medium flow rate flowing into the use-side heat exchangers 35 as described above. The control on the integrated heat medium flow switching devices 40 is specifically as follows. Specifically, on the heating side, the integrated heat medium flow switching devices 40 are controlled so that the temperature difference between the temperature detected by the temperature sensor 55b and the temperature of the heat medium flowing out of the use-side heat exchangers 35 is kept to a target value. On the cooling side, the integrated heat medium flow switching devices 40 are controlled so that the temperature difference between the temperature of the heat medium flowing out of the use-side heat exchangers 35 and the temperature detected by the temperature sensor 55a is kept to a target value. By controlling the integrated heat medium flow switching devices 40 to control the heat medium flow rate flowing into the use-side heat exchangers 35 in the above-mentioned manner, the air conditioning load for the indoor space 7 can be appropriately treated.

### [Mixed Operation Mode: Cooling Main Operation]

Now, the cooling main operation mode of the mixed operation, in which the heating load is generated in any of the use-side heat exchangers 35 and the cooling load is generated in the remaining use-side heat exchangers 35, is described.

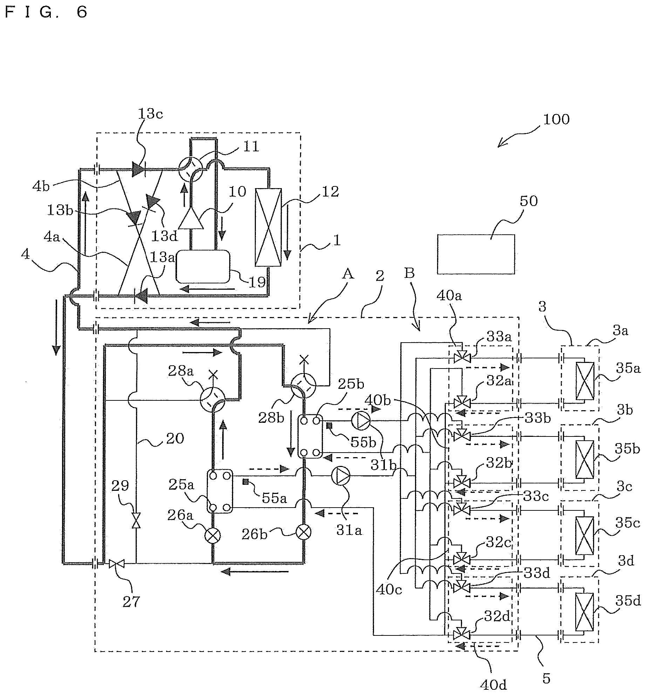

Fig. 6 is a refrigerant circuit diagram illustrating the flow of the refrigerant in the cooling main operation mode of the air-conditioning apparatus 100 according to the embodiment of the present invention. In Fig. 6, the pipes indicated by the thick lines are the pipes through which the heat source-side refrigerant circulates. Further, in Fig. 6, the direction of the flow of the heat source-side refrigerant is indicated by the solid arrows, whereas the direction of the flow of the heat medium is indicated by the dashed arrows.

The outline of differences between the main operation and the cooling only operation is now first described. The expansion device 26a and the expansion device 26b are both controlled to function as expansion valves during the cooling only operation, but one of the expansion devices 26a and 26b is fully opened and the other thereof is controlled to function as the expansion valve during the cooling main operation. In this manner, both the intermediate heat exchanger 25a and the intermediate heat exchanger 25b function as the evaporators during the cooling only operation, whereas the intermediate heat exchanger 25b functions as the condenser and the intermediate heat exchanger 25a functions as the evaporator during the cooling main operation similarly to the heating main operation.

In the case of the cooling main operation mode illustrated in Fig. 6, in the outdoor unit 1, the first refrigerant flow switching device 11 is switched so that the heat source-side refrigerant discharged from the compressor 10 flows into the heat source-side heat exchanger 12. In the relay unit 2, the pump 31a and the pump 31b are driven to open the integrated heat medium flow switching devices 40. By opening the integrated heat medium flow switching devices 40a to 40d, the heat medium circulates between the intermediate heat exchanger 25a and the use-side heat exchanger 35 in which the heating load is generated. Further, the heat medium also circulates between the intermediate heat exchanger 25b and the use-side heat exchanger 35 in which the cooling load is generated. The second refrigerant flow switching device 28a is switched to the cooling side (dotted-line side in Fig. 2), whereas the second refrigerant flow switching device 28b is switched to the heating side (solid line side in Fig. 2). The expansion device 26b is fully opened, the opening and closing device 27 is closed, and the opening and closing device 29 is closed.

The flow of the heat source-side refrigerant in the refrigerant circuit A in the cooling main operation mode is the same as the flow of the heat source-side refrigerant in the refrigerant circuit A in the cooling only operation mode described above. Further, the flow of the heat medium in the heat medium circuit B in the cooling main operation mode is the same as the flow of the heat medium in the heat medium circuit B in the heating main operation described above.

Even in the cooling main operation mode, the integrated heat medium flow switching devices 40 control the heat medium flow rate flowing into the use-side heat exchangers 35 as described above. The control on the integrated heat medium flow switching devices 40 is specifically as follows. Specifically, on the cooling side, the integrated heat medium flow switching devices 40 are controlled so that the temperature difference between the temperature of the heat medium flowing out of the use-side heat exchangers 35 and the temperature detected by the temperature sensor 55b is kept to the target value. On the heating side, the integrated heat medium flow switching devices 40 are controlled so that the temperature difference between the temperature detected by the temperature sensor 55a and the temperature of the heat medium flowing out of the use-side heat exchangers 35 is kept to the target value. By controlling the integrated heat medium flow switching devices 40 to control the heat medium flow rate flowing into the use-side heat exchangers 35 in the above-mentioned manner, the air conditioning load for the indoor space 7 can be appropriately treated.

### [Structure of Integrated Heat Medium Flow Switching Devices 40]

Next, a specific structure of the integrated heat medium flow switching devices 40 is described.

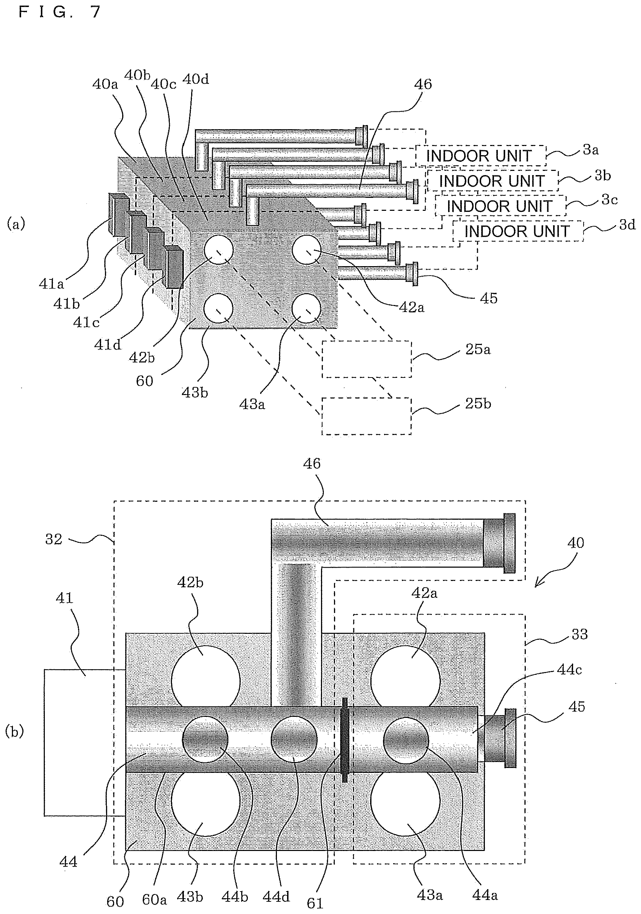

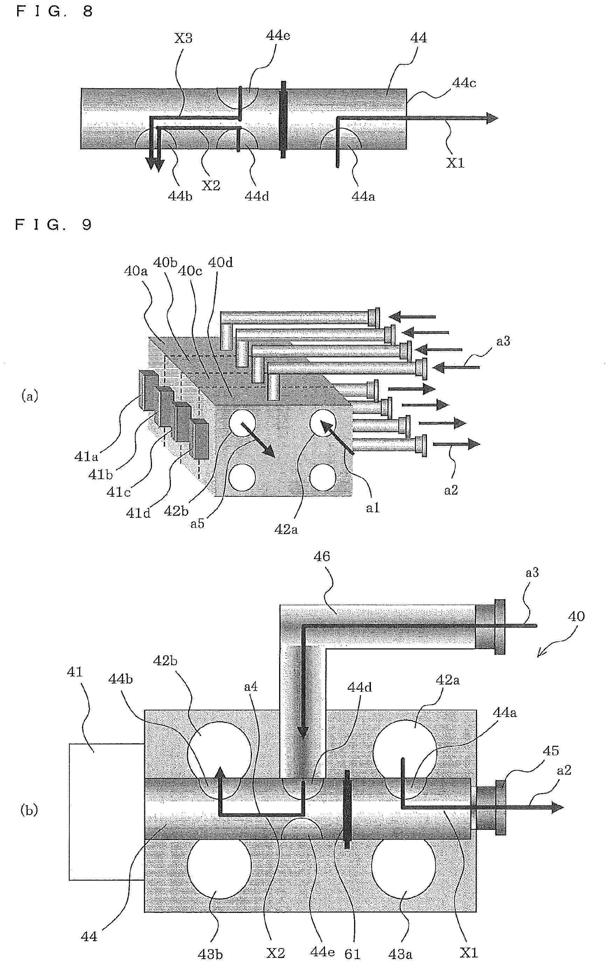

Figs. 7 are explanatory diagrams illustrating the integrated heat medium flow switching devices 40 included in the relay unit 2 illustrated in Fig. 1. Fig. 7(a) is an illustration of the four integrated heat medium flow switching devices 40 (40a to 40d) and a conceptual perspective view of a configuration of connection between the integrated heat medium flow switching devices 40 and each of the intermediate heat exchangers 25 and the indoor units 3. Fig. 7(b) is a longitudinal sectional view of the integrated heat medium flow switching device 40. Fig. 8 is a conceptual diagram illustrating a configuration of the valve body 44 illustrated in Figs. 7.

The integrated heat medium flow switching device 40 includes a body 60, a pair of heat medium delivery main pipes 42a and 42b, a pair of heat medium delivery main pipes 43a and 43b, the single valve body 44 formed in a shaft-like shape, an indoor-unit supply pipe 45, and an indoor-unit return pipe 46.

The body 60 is made of PPS or a resin. However, other materials can also be used as long as a heat capacity of the heat medium is not significantly lost due to heat conduction and heat rejection to the body 60. The body 60 includes the pair of heat medium delivery main pipes 42a and 42b and the pair of heat medium delivery main pipes 43a and 43b, which are opposed to each other through the valve body 44 described below therebetween and are provided to penetrate the body 60 in parallel to each other. The pair of heat medium delivery main pipes 42a and 42b is connected to the intermediate heat exchanger 25a by a pipe (not shown), whereas the pair of heat medium delivery main pipes 43a and 43b is connected to the intermediate heat exchanger 25b by a pipe (not shown).

The body 60 includes a valve chamber 60a that intersects the pair of heat medium delivery main pipes 42a and 42b and the pair of heat medium delivery main pipes 43a and 43b. In the valve chamber 60a, the valve body 44 is provided so as to be axially rotatable. The valve body 44 is rotationally driven by the driving device 41.

The indoor-unit supply pipe 45 is connected to an indoor unit-side inlet opening 44c of the valve body 44, which is described later. Further, the indoor-unit return pipe 46 is connected to the body 60, and hence an end portion of the indoor-unit return pipe 46 is open to the valve chamber 60a.

As illustrated in Fig. 8, the valve body 44 includes a pair of selection-side openings 44a and 44b formed in an outer peripheral surface of the valve body 44 so as to be spaced apart from each other in an axial direction of the valve body 44, and an indoor unit-side inlet opening 44c that is formed at an axial end portion of the valve body 44 and is to be connected to the inlet side of the use-side heat exchanger 35. The valve body 44 further includes two indoor unit-side outlet openings 44d and 44e formed in the outer peripheral surface of the valve body 44 at positions opposed to each other.

The pair of selection-side openings 44a and 44b is brought into communication with the pair of heat medium delivery main pipes 42a and 42b or the pair of heat medium delivery main pipes 43a and 43b depending on a rotation stop position of the valve body 44. The indoor unit-side outlet opening 44d is formed in the valve body 44 so as to be brought into communication with the indoor-unit return pipe 46 when the pair of selection-side openings 44a and 44b is brought into communication with the pair of heat medium delivery main pipes 42a and 42b. Further, the indoor unit-side outlet opening 44e is formed in the valve body 44 so as to be brought into communication with the indoor-unit return pipe 46 when the pair of selection-side openings 44a and 44b is brought into communication with the pair of heat medium delivery main pipes 43a and 43b.

As illustrated in Fig. 8, the valve body 44 includes the pair of selection-side openings 44a and 44b formed in the outer peripheral surface of the valve body 44 so as to be spaced apart from each other in the axial direction of the valve body 44, and the indoor unit-side inlet opening 44c that is formed at the axial end portion of the valve body 44 and is to be connected to the inlet side of the use-side heat exchanger 35. The valve body 44 further includes the two indoor unit-side outlet openings 44d and 44e formed in the outer peripheral surface of the valve body 44 at positions opposed to each other. The indoor unit-side outlet opening 44d is formed in the valve body 44 so as to be brought into communication with the indoor-unit return pipe 46 when the pair of selection-side openings 44a and 44b is brought into communication with the pair of heat medium delivery main pipes 42a and 42b. Further, the indoor unit-side outlet opening 44e is formed in the valve body 44 so as to be brought into communication with the indoor-unit return pipe 46 when the pair of selection-side openings 44a and 44b is brought into communication with the pair of heat medium delivery main pipes 43a and 43b.

In the valve body 44, three passages including a supply passage X1, a selective return passage X2, and a selective return passage X3 are formed, as indicated by the arrows in Fig. 8. The supply passage X1 is a passage through which the selection-side opening 44a and the indoor unit-side inlet opening 44c are brought into communication with each other. The selective return passage X2 is a passage through which the supply passage X1, the indoor unit-side outlet opening 44d, and the selection-side opening 44b are brought into communication with each other. The selective return passage X3 is a passage through which the indoor unit-side outlet opening 44e and the selection-side opening 44b are brought into communication with each other.

Further, in the valve body 44, an adiabatic wall 61 is formed between the supply passage X1 and the selective return passages X2 and X3 so that the heat capacity is prevented from being transferred and received between the heat media passing through the respective passages. The adiabatic wall 61 is formed in the valve body 44 in this structure, but the structure is not limited thereto as long as the heat capacity is not transferred and received between the heat media.

In the integrated heat medium flow switching devices 40 configured as described above, when the valve body 44 is axially driven by the driving device 41, the pair of selection-side openings 44a and 44b is brought into communication with the pair of heat medium delivery main pipes 42a and 42b or the pair of heat medium delivery main pipes 43a and 43b. As a result, the heat medium passage is switched to the heat medium delivery main pipes 42a and 42b or the heat medium delivery main pipes 43a and 43b. Specifically, a destination of connection of the indoor unit 3 can be switched to the intermediate heat exchanger 25a or the intermediate heat exchanger 25b.

A portion surrounded by the dotted line on the left of the adiabatic wall 61 in Fig. 7(b) corresponds to the heat medium flow switching device 32 illustrated in Fig. 2, whereas a portion surrounded by the dotted line on the right of the adiabatic wall 61 in Fig. 7(b) corresponds to the heat medium flow switching device 33 illustrated in Fig. 2. Specifically, the integrated heat medium flow switching device 40 has a structure formed by integrating the heat medium flow switching devices 32 and 33 by integrating the valve bodies of the heat medium flow switching devices 32 and 33.

As described above, in this embodiment, for achieving the configuration in which the destination of connection of the indoor unit 3 is switched to the intermediate heat exchanger 25a or the intermediate heat exchanger 25b, the valve bodies of the heat medium flow switching devices 32 and 33 are integrated. In this manner, two driving devices, which are otherwise required to respectively drive the two valve bodies, can be replaced by the shared single driving device 41. As a result, the space saving can be improved. In addition, driving power can be reduced to improve the energy saving.

Further, in the integrated heat medium flow switching device 40, the opening area (communicating area) between the openings (the pair of selection-side openings 44a and 44b and the indoor unit-side outlet openings 44d and 44e) formed in the outer peripheral surface of the valve body 44 and the heat medium delivery main pipe 42 or the heat medium delivery main pipe 43 changes depending on the rotation stop position of the valve body 44. Therefore, by configuring the driving device 41 so as to be capable of controlling the rotation stop position of the valve body 44 such as a stepping motor, the flow rate of the heat medium can be controlled. In a case where only the flow switching function is required without the need of the flow-rate controlling function in the integrated heat medium flow switching devices 40, a device simply capable of switching (such as an ON/OFF power supply) may be used.

As described above, the integrated heat medium flow switching device 40 can control the passage and the flow rate depending on the rotation stop position of the valve body 44.

The integrated heat medium flow switching devices 40 are provided so as to correspond to the plurality of indoor units 3 in a one-by-one fashion as described above. All the integrated heat medium flow switching devices 40 included in the relay unit 2 may be formed integrally. Specifically, the bodies 60 of all the integrated heat medium flow switching devices 40 are first formed integrally as the common body. Then, the heat medium delivery main pipes 42 and the heat medium delivery main pipes 43 of all the integrated heat medium flow switching devices 40 are formed as a single pipe shared by all the integrated heat medium flow switching devices 40. In this manner, all (four in this case) integrated heat medium flow switching devices 40 can be formed integrally. The configuration is not limited to that in which all the integrated heat medium flow switching devices 40 are integrated, and some of the integrated heat medium flow switching devices 40 may be integrated.

Further, the integrated heat medium flow switching devices 40 may be separated for the respective indoor units 3 so that the adjacent integrated heat medium flow switching devices 40 are connectable to each other.

Next, an operation (flow switching and flow rate control) of the integrated heat medium flow switching device 40 is described. Now, the following three cases are described.
1. Case where the indoor units 3 are connected to the intermediate heat exchanger 25a side.
2. Case where the indoor units 3 are connected to the intermediate heat exchanger 25b side.
3. Case where the indoor unit 3 is separated from the heat medium circuit B.

### [Case where Indoor Units 3 are connected to Intermediate Heat Exchanger 25a Side]

Figs. 9 are explanatory diagrams of the rotation stop position of the valve body 44 of the integrated heat medium flow switching device 40 and the flow of the heat medium in a state in which the integrated heat medium flow switching devices 40 included in the relay unit 2 illustrated in Fig. 1 are switched to the intermediate heat exchanger 25a side. Fig. 9(a) is an illustration of the four integrated heat medium flow switching devices 40a to 40d, and Fig. 9(b) is a longitudinal sectional view of the integrated heat medium flow switching device 40. In Figs. 9, the direction of the flow of the heat medium is indicated by the solid arrows.

In the case where the integrated heat medium flow switching device 40 is switched to the intermediate heat exchanger 25a side, the valve body 44 is rotated by the driving device 41 to allow the internal passage in the valve body 44 to be brought into communication with the pair of heat medium delivery main pipes 42a and 42b as illustrated in Fig. 9(b). Specifically, the pair of selection-side openings 44a and 44b is brought into communication with the pair of heat medium delivery main pipes 42a and 42b so that the indoor unit-side outlet opening 44d is brought into communication with the indoor unit return pipe 46.

In the integrated heat medium flow switching device 40, the heat medium, which is pressurized by the pump 31 to flow out thereof, flows into the heat medium delivery main pipe 42a (the arrow a1). The heat medium flowing into the heat medium delivery main pipe 42a passes through the supply passage X1 to be delivered to the connected indoor unit 3 (the arrows a2). The heat medium, which is delivered to the connected indoor unit 3 and exchanges heat with the indoor space 7 in the use-side heat exchanger 35 included in the connected indoor unit 3, flows into the integrated heat medium flow switching device 40 again. Specifically, the heat medium, which flows into the integrated heat medium flow switching device 40, first flows into the indoor-unit return pipe 46 (the arrows a3) and passes through the selective return passage X2 to flow into the heat medium delivery main pipe 42b (the arrow a4). Then, the heat medium, which passes through the heat medium delivery main pipe 42b, flows out of the integrated heat medium flow switching device 40 to flow into the intermediate heat exchanger 25a again (the arrow a5). As described above, by switching the rotation stop position of the valve body 44 of the integrated heat medium flow switching device 40, the heat medium circuit B that connects the intermediate heat exchanger 25a and the indoor units 3 is formed.

Through the valve body 44, the heat medium passing through the supply passage X1 to flow from the heat medium delivery main pipe 42a to the connected indoor unit 3 and the heat medium returning from the connected indoor unit 3 to the integrated heat medium flow switching device 40 to pass through the selective return passage X2 pass. The heat media have a temperature difference, but the transfer and reception of the heat capacity between the heat media is suppressed by the adiabatic wall 61.

The rotation stop position of the valve body 44 and the flow of the heat medium inside the valve body 44 in the case where the integrated heat medium flow switching device 40 is switched to the intermediate heat exchanger 25a side are described above. The integrated heat medium flow switching device 40 also controls the flow rate of the heat medium flowing through the connected indoor unit 3 as described above in addition to the flow switching.

For the control of the flow rate of the heat medium, the rotation stop position of the valve body 44 is controlled by the driving device 41. When the opening area of the passage is to be enlarged, the rotation stop position of the valve body 44 is controlled so that an opening area of a communicating portion between the pair of heat medium delivery main pipes 42a and 42b and the pair of selection-side openings 44a and 44b is increased. On the contrary, when the opening area of the passage is to be reduced, the rotation stop position of the valve body 44 is controlled so that the opening area of the communicating portion between the pair of heat medium delivery main pipes 42a and 42b and the pair of selection-side openings 44a and 44b is reduced.

### [Case where Indoor Units 3 are connected to Intermediate Heat Exchanger 25b Side]

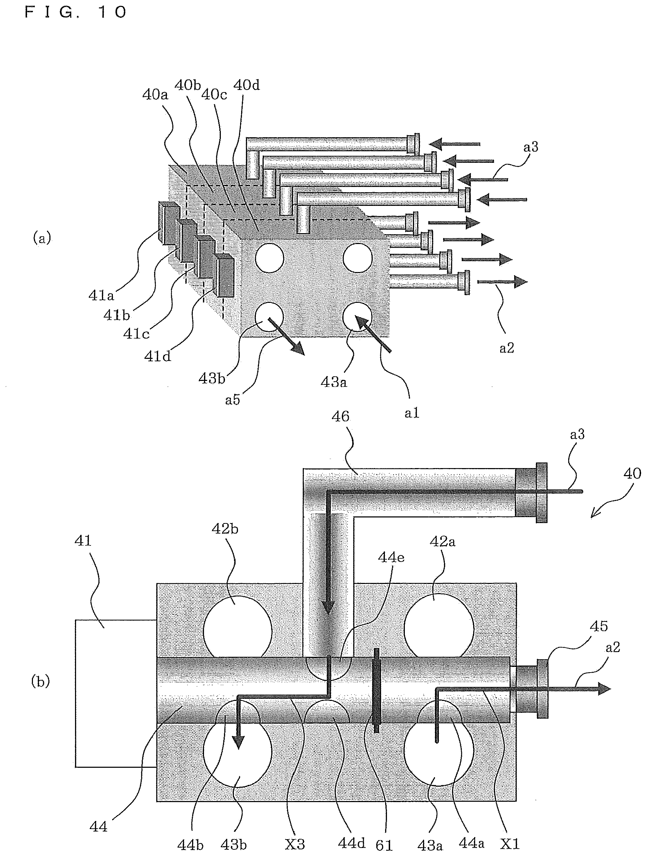

Figs. 10 are explanatory diagrams of the rotation stop position of the integrated heat medium flow switching device 40 and the flow of the heat medium in a state in which the integrated heat medium flow switching devices 40 included in the relay unit 2 illustrated in Fig. 1 are switched to the intermediate heat exchanger 25b side. Fig. 10(a) is an illustration of the four integrated heat medium flow switching devices 40a to 40d, and Fig. 10(b) is a longitudinal sectional view of the integrated heat medium flow switching device 40. In Figs. 10, the direction of the flow of the heat medium is indicated by the solid arrows.

In the case where the integrated heat medium flow switching device 40 is switched to the intermediate heat exchanger 25a side, the valve body 44 is rotated by the driving device 41 to allow the passage in the valve body 44 to be brought into communication with the pair of heat medium delivery main pipes 43a and 43b as illustrated in Figs. 10. Specifically, the pair of selection-side openings 44a and 44b is brought into communication with the pair of heat medium delivery main pipes 43a and 43b so that the indoor unit-side outlet opening 44e is brought into communication with the indoor unit return pipe 46.

In the integrated heat medium flow switching device 40, the heat medium, which is pressurized by the pump 31 to flow out thereof, flows into the heat medium delivery main pipe 43a (the arrow a1). The heat medium flowing into the heat medium delivery main pipe 43a passes through the supply passage X1 to be delivered to the connected indoor unit 3 (the arrows a2). The heat medium, which is delivered to the connected indoor unit 3 and exchanges heat with the indoor space 7 in the use-side heat exchanger 35 included in the connected indoor unit 3, flows into the integrated heat medium flow switching device 40 again. Specifically, the heat medium, which flows into the integrated heat medium flow switching device 40, first flows into the indoor-unit return pipe 46 (the arrows a3) and passes through the selective return passage X3 to flow into the heat medium delivery main pipe 43b (the arrow a4). Then, the heat medium, which passes through the heat medium delivery main pipe 43b, flows out of the integrated heat medium flow switching device 40 to flow into the intermediate heat exchanger 25b again (the arrow a5). As described above, by switching the rotation stop position of the valve body 44 of the integrated heat medium flow switching device 40, the heat medium circuit B that connects the intermediate heat exchanger 25b and the indoor units 3 is formed.

Through the valve body 44, the heat medium passing through the supply passage X1 to flow from the heat medium delivery main pipe 43a to the connected indoor unit 3 and the heat medium returning from the connected indoor unit 3 to the integrated heat medium flow switching device 40 to pass through the selective return passage X3 pass. The heat media have a temperature difference, but the transfer and reception of the heat capacity between the heat media is suppressed by the adiabatic wall 61.

The rotation stop position of the valve body 44 and the flow of the heat medium inside the valve body 44 in the case where the integrated heat medium flow switching device 40 is switched to the intermediate heat exchanger 25b side are described above. The integrated heat medium flow switching device 40 also controls the flow rate of the heat medium flowing through the connected indoor unit 3 as described above in addition to the flow switching.

For the control of the flow rate of the heat medium, the rotation position of the valve body 44 is controlled by the driving device 41. When the opening area of the passage is to be enlarged, the rotation stop position of the valve body 44 is controlled so that an opening area of a communicating portion between the pair of heat medium delivery main pipes 43a and 43b and the pair of selection-side openings 44a and 44b is increased. On the contrary, when the opening area of the passage is to be reduced, the rotation stop position of the valve body 44 is controlled so that the opening area of the communicating portion between the pair of heat medium delivery main pipes 43a and 43b and the pair of selection-side openings 44a and 44b is reduced.

When the air-conditioning apparatus 100 is currently operating in, for example, the heating main operation mode, the intermediate heat exchanger 25b functions as the condenser, and the heating heat medium flows through the pair of heat medium delivery main pipes 43a and 43b, which is in communication with the intermediate heat exchanger 25b, as illustrated in Figs. 7. On the other hand, the intermediate heat exchanger 25a functions as the evaporator, and the cooling heat medium flows through the pair of heat medium delivery main pipes 42a and 42b, which is in communication with the intermediate heat exchanger 25a. When, for example, the indoor unit 3d is switched from the heating operation to the cooling operation, the controller 50 drives the driving device 41 to rotate the valve body 44 of the integrated heat medium flow switching device 40d from a state illustrated in Fig. 10(b) to a state illustrated in Fig. 9(a). As a result, the cooling heat medium having a temperature based on the cooling operation, which flows through the pair of heat medium delivery main pipes 42a and 42b, can be sent to the indoor unit 3d.

### [Case where Indoor Unit 3 is separated from Heat Medium Circuit B]

The heat medium is required so as not to be sent to the indoor unit 3 whose operation is stopped so that the heat is not exchanged between the heat medium and the indoor air in the use-side heat exchanger 35. Therefore, the indoor unit 3 is separated from the heat medium circuit B by the integrated heat medium flow switching device 40. Now, an operation of the integrated heat medium flow switching device 40 in the case where the indoor unit 3 is separated from the heat medium circuit B is described.

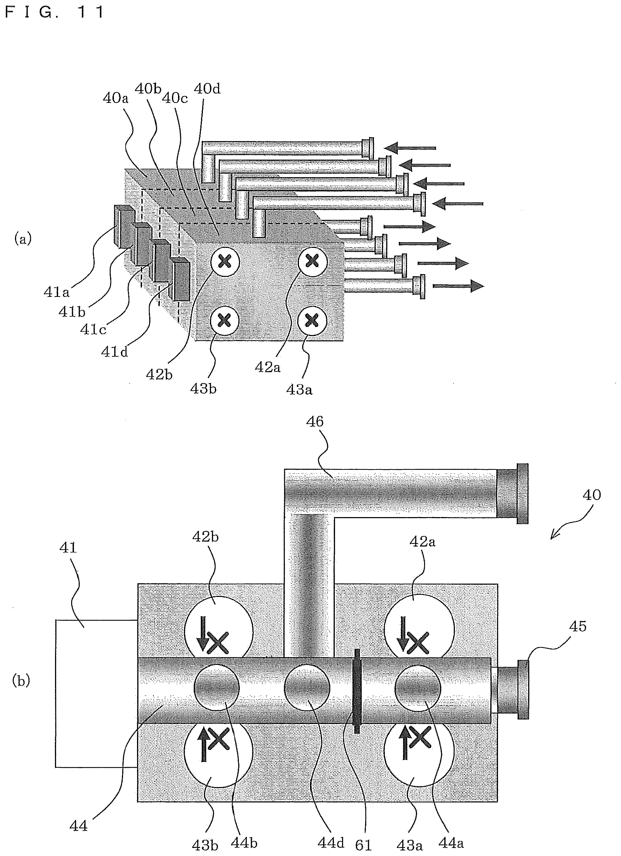

Figs. 11 are explanatory diagrams of the rotation stop position of the integrated heat medium flow switching device 40 and the flow of the heat medium in the case where the indoor unit 3 is separated from the heat medium circuit B by the integrated heat medium flow switching device 40 included in the relay unit 2 illustrated in FIG. 1. Fig. 11(a) is an illustration of the four integrated heat medium flow switching devices 40a to 40d, and Fig. 11(b) is a longitudinal sectional view of the integrated heat medium flow switching device 40. In Fig. 11(b), the direction of the flow of the heat medium is indicated by the solid arrows.

When the indoor unit 3 is to be separated from the heat medium circuit B, the valve body 44 is rotated by the driving device 41 and is stopped at a position illustrated in Fig. 11(b). Specifically, the valve body 44 is stopped at a position at which the pair of selection-side openings 44a and 44b and the indoor unit-side outlet opening 44d are not brought into communication with any of the pair of heat medium delivery main pipes 42a and 42b, the pair of heat medium delivery main pipes 43a and 43b, and the indoor-unit return pipe 46. Specifically, the rotation stop position of the valve body 44 is controlled to the position at which the opening degree is zero. As a result, the passage between the relay unit 2 and the indoor unit 3 is interrupted so that the indoor unit 3 can be separated from the heat medium circuit B.

The integrated heat medium flow switching devices 40 are provided so as to respectively correspond to the indoor units 3. For each of the indoor units 3, the flow of the heat medium into the indoor unit 3 and the interruption thereof can be selected individually. Therefore, even if some of the four indoor units 3 are performing the heating or cooling operation, the heat medium can be prevented from flowing into the other indoor unit(s) 3 in the stopped state.

The indoor unit 3 can be separated from the heat medium circuit B as described above, and hence the following effects can also be produced. Specifically, when a component included in the heat medium circuit B in the relay unit 2 is replaced and maintained, the indoor unit 3 can be separated from the heat medium circuit B in advance. Therefore, during work, the amount of heat medium exhausted from the heat medium circuit B can be reduced to be minimum necessary. As a result, working efficiency can be improved in elimination of the need of refilling the heat medium or the like. Further, the effects can be similarly produced even when one or more of the plurality of indoor units 3 connected to the relay unit 2 is replaced.

As described above, according to this embodiment, the valve bodies of the heat medium flow switching device 32 and the heat medium flow switching device 33 are integrated. The driving devices, which are otherwise required separately, can be formed as the shared single driving device 41. Therefore, the number of driving devices 41 can be reduced to achieve energy saving and space saving. Further, the functions of both the heat medium flow switching device 32 and the heat medium flow switching device 33 can be demonstrated by the singe integrated heat medium flow switching device 40. Thus, the number of heat medium flow switching devices can be substantially reduced to improve ease of maintenance and ease of assembly.

Further, there is provided the structure in which the valve body 44 is formed in the shaft-like shape and the internal passage in the valve body 44 is brought into communication with the pair of heat medium delivery main pipes 42a and 42b or the pair of heat medium delivery main pipes 43a and 43b depending on the rotation stop position of the valve body 44. By the structure described above, the integrated heat medium flow switching device 40, in which the heat medium flow switching device 32 and the heat medium flow switching device 33 are integrated, can be formed.

Further, the pair of selection-side openings 44a and 44b is formed in the outer peripheral surface of the valve body 44 so that the communicating area in communication with the pair of heat medium delivery main pipes 42a and 42b or the pair of heat medium delivery main pipes 43a and 43b changes based on the rotation position of the valve body 44. As a result, the integrated heat medium flow switching device 40 can control the flow rate of the heat medium flowing in the use-side heat exchanger 35. Therefore, by the operation of the single driving device 41, both of the flow switching function and the flow-rate controlling function can be performed simultaneously. Accordingly, even when the number of the connected indoor units 3 is increased, a minimum number of the driving device 41 can be mounted to achieve the energy saving and the space saving.

Further, by stopping the valve body 44 at the rotation stop position at which the selection-side openings 44a and 44b of the valve body 44 are not brought into communication with any of the pair of heat medium delivery main pipes 42a and 42b and the pair of heat medium delivery main pipes 43a and 43b, the passage between the relay unit 2 and the indoor unit 3 can be interrupted. In the related-art air-conditioning apparatus, for the maintenance including replacement of a component of the heat medium circuit, the heat medium is required to be temporarily entirely exhausted from the heat medium circuit. After the maintenance, refilling is required. However, in the air-conditioning apparatus 100 according to this embodiment, the indoor unit 3 can be separated from the heat medium circuit B. Therefore, reduction of the amount of exhausted heat medium and simplification of the maintenance work are enabled for the following reasons.

Specifically, at the time of implementation of the maintenance of the heat medium circuit B, the indoor unit 3 is separated from the heat medium circuit B. In this manner, the component of the heat medium circuit, which is included in the relay unit 2, can be replaced while the heat medium is kept in the use-side heat exchangers 35 and the heat medium pipes 5. Therefore, the amount of exhausted heat medium at the time of replacement of the component or the maintenance can be reduced, thereby enabling the simplification of the maintenance work. As a result, ease of system maintenance can be improved.

Further, in this embodiment, the number of heat medium flow switching devices can be substantially reduced as described above. Thus, a number of times of maintenance such as the component replacement can also be reduced, thereby enabling the improvement of convenience in system use.

Further, the passage from the relay unit 2 to the indoor unit 3 is closed by the integrated heat medium flow switching device 40 so that the heat medium is not sent to the indoor unit 3 whose operation is stopped. As a result, delivery power of the pumps 31 that is the heat medium delivery device can be reduced, while workability can be improved.

Further, the case where the accumulator 19 is included in the air-conditioning apparatus 100 has been described as an example in this embodiment, but the accumulator 19 is not required to be provided. In general, air-sending devices are mounted to the heat source-side heat exchanger 12 and the use-side heat exchangers 35 to accelerate the condensation or evaporation by sending air in many cases. However, the heat source-side heat exchanger and the use-side heat exchangers are not limited thereto. For example, a panel heater using radiation or the like can also be used as the use-side heat exchanger 35, whereas a water-cooled type heat exchanger that allows the heat to move through water or the antifreezing solution can also be used as the heat source-side heat exchanger. Specifically, any kind of heat source-side heat exchanger and use-side heat exchanger can be used as the heat source-side heat exchanger 12 and the use-side heat exchanger 35 as long as a structure thereof can reject or remove heat.

Further, the case where the number of use-side exchangers 35 is four has been described as an example in this embodiment, but the number of use-side exchangers 35 is not particularly limited. Further, the case where the number of intermediate heat exchangers 25a and 25b is two has been described as an example, but it is apparent that the number of intermediate heat exchangers 25a and 25b is not limited. Any number of intermediate heat exchangers may be installed as long as the configuration is such that the heat medium can be cooled or/and heated. Further, the number of each of the pumps 31a and 31b is not limited to one. A plurality of small-capacity pumps may be arranged in parallel and connected.

There has been described above the configuration in which the number of intermediate heat exchangers 25 is two and the valve bodies of all the heat medium flow switching devices (specifically, the two heat medium flow switching devices corresponding to the heat medium flow switching device 32 and the heat medium flow switching device 33) required for switching to any of the intermediate heat exchangers are integrated. When the number of intermediate heat exchangers 25 is three or more, a switching device capable of switching to connect the indoor unit 3 to any of the three or more intermediate heat exchangers 25 can be configured by combining a plurality of the integrated heat medium flow switching devices 40 having the configuration illustrated in Figs. 7. This configuration corresponds to a configuration in which some of the plurality of valve bodies included in the plurality of heat medium flow switching devices that are necessary to switch the indoor unit 3 to any of the intermediate heat exchangers 25 are integrated. Therefore, even in the case of the configuration described above, the number of driving devices 41 can be reduced to obtain the effects of space saving and energy saving.

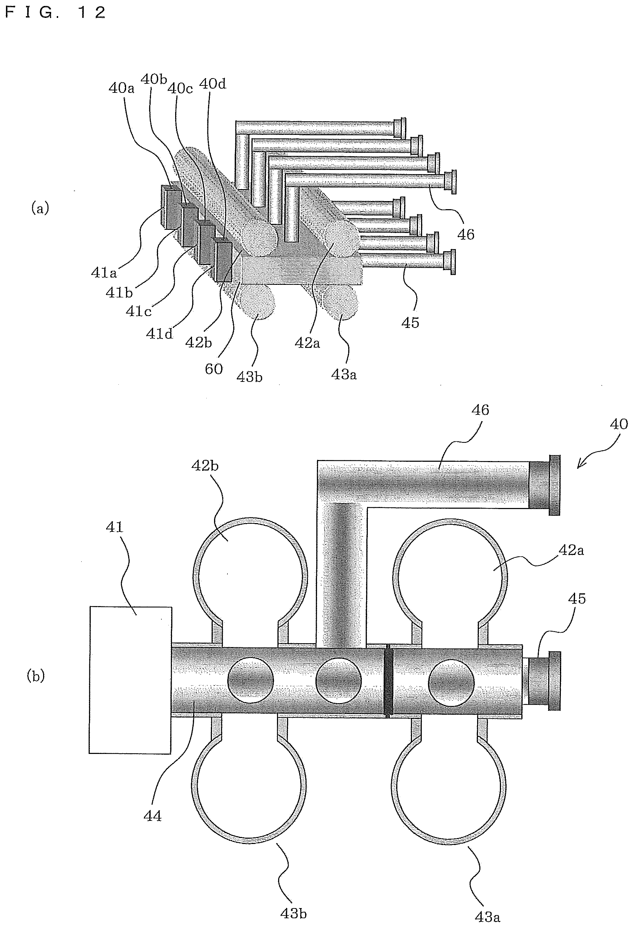

The integrated heat medium flow switching device 40 has the configuration in which the pair of heat medium delivery main pipes 42a and 42b and the pair of heat medium delivery main pipes 43a and 43b are provided in the body 60 in the above description, yet the integrated heat medium flow switching device 40 may be configured as illustrated in Figs. 12. Specifically, the body 60 may be reduced in size so that the pair of heat medium delivery main pipes 42a and 42b and the pair of heat medium delivery main pipes 43a and 43b are exposed from the body 60. Even in this case, the same functions and effects as those described above can be obtained. Further, even in the case of the configuration described above, a modified example applied to the same portion as that described above can be similarly applied.

The second refrigerant flow switching devices 28 are illustrated as four-way valves in Fig. 2 or the like, but the second refrigerant flow switching devices are not limited thereto. A plurality of two-way flow switching valves or three-way flow switching valves may be used to configure the second refrigerant flow switching device so that the refrigerant flows in the same manner.

### Reference Signs List

1 outdoor unit 2 relay units (3a-3d) indoor unit 4 refrigerant pipe 4a refrigerant-use connection pipe 4b refrigerant-use connection pipe 5 heat-medium pipe 6 outdoor space 7 indoor space 8 space 9 construction 10 compressor 11 first refrigerant flow switching device 12 heat source-side heat exchanger 13a check valve 13b check valve 13c check valve 13d check valve 19 accumulator 20 bypass pipe 25 (25a, 25b) intermediate heat exchanger 26 (26a, 26b) expansion device 27 opening and closing device 28 (28a, 28b) second refrigerant flow switching device 29 opening and closing device 31 (31a, 31b) pump 32 (32a, 32b) heat medium flow switching device 33 (33a-33d) heat medium flow switching device 35 (35a-35d) use-side heat exchanger 40 (40a-40d) integrated heat medium flow switching device 41 (41a-41d) driving device 42 (42a, 42b) heat medium delivery main pipe 43 (43a, 43b) heat medium delivery main pipe 44 valve body 44a selection-side opening 44b selection-side opening 44c indoor unit-side inlet opening 44d indoor unit-side outlet opening 44e indoor unit-side outlet opening 45 indoor-unit supply pipe 46 indoor-unit return pipe 50 controller 55 (55a, 55b) temperature sensor 60 body 60a valve chamber 61 adiabatic wall 100 air-conditioning apparatus A refrigerant circuit B heat medium circuit X1 supply passage X2 selective return passage X3 selective return passage

## Claims

1. An air-conditioning apparatus (100), comprising:
a refrigerant circuit (A) formed by connecting a compressor (10), a heat source-side heat exchanger (12), a plurality of expansion devices (26),
and refrigerant-side passages in a plurality of intermediate heat exchangers (25) by refrigerant pipes (4) to allow heat source-side refrigerant to circulate therethrough;
a plurality of heat medium circuits (B) formed by connecting a plurality of pumps (31), a plurality of use-side heat exchangers (35), and heat medium-side passages in the plurality of intermediate heat exchangers (25) by heat-medium pipes (5) to allow a heat medium to circulate therethrough; and
a plurality of heat medium flow switching devices (32, 33) provided correspondingly to each of the plurality of use-side heat exchangers (35), and the plurality of heat medium flow switching devices (32, 33) configured to switch a passage for the heat medium by connecting the use-side heat exchangers (35) to any one of the plurality of intermediate heat exchangers (25),
the plurality of use-side heat exchangers (35) being individually connected to any one of the plurality of intermediate heat exchangers (25) to enable a heating operation or a cooling operation;
a plurality of integrated heat medium flow switching devices (40) wherein each of the integrated heat medium flow switching devices (40) is formed by entirely or partially integrating each of the plurality of heat medium flow switching devices (32, 33), **characterized in that** the air-conditioning device (100) further comprises
a plurality of single driving devices (41) provided for each of the integrated heat medium flow switching devices (40) and configured to drive the respective integrated heat medium flow switching device (40), and **in that** each of the integrated heat medium flow switching devices (40) has a valve body (44), and is configured to control the passage and a flow rate of the heat medium depending on a rotation stop position of the valve body (44), wherein
each of the single driving device (41) is configured to control the rotation stop position of the valve body (44), wherein each of the integrated heat medium flow switching device (40) is provided for each of the plurality of use-side heat exchangers (35), and wherein each of the integrated heat medium flow switching device (40) comprises
a pair of heat medium delivery main pipes (42, 43), which is provided to the each of the plurality of intermediate heat exchangers (25), and serves as a passage between the intermediate heat exchanger (25) and any one of the plurality of use-side heat exchangers (35),
a body (60) having a valve chamber (60a) intersecting a plurality of the pairs of heat medium delivery main pipes (42, 43), and
the valve body (44) having a shaft-like shape and arranged in the valve chamber (60a) so as to be axially rotatable,
the valve body (44) comprises
a pair of selection-side openings (44a, 44b) to be brought into communication with any one of the plurality of the pairs of heat medium delivery main pipes (42, 43) depending on a rotation stop position of the valve body (44),
an indoor unit-side inlet opening (44c) to be connected to an inlet side of a corresponding use-side heat exchanger (35) of the use-side heat exchangers (35), and
a plurality of indoor unit-side outlet openings (44d, 44e) to be brought into communication with an outlet side of the corresponding use-side heat exchanger (35) of the use-side heat exchangers (35) in a state in which the pair of selection-side openings (44a, 44b) is held in communication with each of the plurality of the pairs of heat medium delivery main pipes (42, 43), and
the valve body (44) formed therein
a supply passage (X1) for bringing one of the pair of selection-side openings (44a, 44b) and the indoor unit-side inlet opening (44c) into communication with each other, and
a plurality of selective return passages (X2, X3) for connecting each of the plurality of indoor unit-side outlet openings (44d, 44e) and an other of the pair of selection-side openings (44a, 44b) to each other.

2. The air-conditioning apparatus (100) of claim 1, wherein
the pair of selection-side openings (44a, 44b) and the plurality of indoor unit-side outlet openings (44d, 44e) are formed in an outer peripheral surface of the valve body (44),
the indoor unit-side inlet opening (44c) is formed in an axial end portion of the valve body (44), and
the valve body (44) further includes an adiabatic wall (61) formed between the supply passage (XI) and the plurality of selective return passages (X2, X3).

3. The air-conditioning apparatus (100) of claim 1 or 2, wherein the valve body (44) is configured to control a flow rate of the heat medium flowing into the corresponding use-side heat exchanger (35) of the use-side heat exchangers (35) by a change in communicating area between the pair of selection-side openings (44a, 44b) and the pair of heat medium delivery main pipes (42, 43) depending on the rotation stop position of the valve body (44).

4. The air-conditioning apparatus (100) of any one of claims 1 to 3, wherein the valve body (44) is configured to separate the corresponding use-side heat exchanger (35) of the use-side heat exchangers (35) from the heat medium circuit (B) by stopping at a rotation stop position at which the pair of selection-side openings (44a, 44b) is not brought into communication with any one of the plurality of the pairs of heat medium delivery main pipes (42, 43).

5. The air-conditioning apparatus (100) of any one of claims 1 to 4, further comprising a first refrigerant flow switching device (11),
wherein the air-conditioning apparatus (100) is configured to operate
a heating only operation mode in which all the plurality of intermediate heat exchangers (25) function as condensers,
a cooling only operation mode in which all the plurality of intermediate heat exchangers (25) function as evaporators, and
a cooling and heating mixed operation mode in which some of the plurality of intermediate heat exchangers (25) function as the condensers and other some of the plurality of intermediate heat exchangers (25) function as the evaporators,
wherein, in the cooling and heating mixed operation mode, when the use-side heat exchanger (35) of the use-side heat exchangers (35) is switched from one of cooling to heating and heating to cooling, the driving device (41) corresponding to the use-side heat exchanger (35) of the use-side heat exchangers (35) for which the operation is switched is driven to switch the passage for the heat medium.

6. The air-conditioning apparatus (100) of any one of claims 1 to 5, wherein the heat source-side refrigerant comprises any one of a single-component refrigerant, a near-azeotropic refrigerant mixture, a zeotropic refrigerant mixture, a refrigerant with a two-phase change including a natural refrigerant, and a refrigerant that turns into a supercritical state.

7. The air-conditioning apparatus (100) of any one of claims 1 to 6, wherein the heat medium comprises any one of an antifreezing solution, water, a mixture of the antifreezing solution and water, and a mixture of water and an additive having an anticorrosive effect.

8. The air-conditioning apparatus (100) of any one of claims 1 to 7, wherein the driving device (41) comprises a stepping motor.

## Patentansprüche

1. Klimaanlage (100), umfassend:
einen Kältemittelkreislauf (A), der durch Verbinden eines Verdichters (10), eines wärmequellenseitigen Wärmetauschers (12), einer Vielzahl von Expansionseinrichtungen (26) und kältemittelseitigen Durchgängen in einer Vielzahl von Zwischenwärmetauschern (25) durch Kältemittelleitungen (4) gebildet wird, um zu ermöglichen, dass wärmequellenseitiges Kältemittel dort hindurch zirkuliert;
eine Vielzahl von Wärmemediumkreisläufen (B), die durch Verbinden einer Vielzahl von Pumpen (31), einer Vielzahl von nutzungsseitigen Wärmetauschern (35) und wärmemediumseitigen Durchgängen in der Vielzahl von Zwischenwärmetauschern (25) durch Wärmemediumleitungen (5) gebildet werden, um zu ermöglichen, dass ein Wärmemedium dort hindurch zirkuliert; und
eine Vielzahl von Wärmemedium-Strömungsschalteinrichtungen (32, 33), die entsprechend für jeden der Vielzahl von nutzungsseitigen Wärmetauschern (35) vorgesehen sind, und wobei die Vielzahl von Wärmemedium-Strömungsschalteinrichtungen (32, 33) eingerichtet sind, durch Verbinden der nutzungsseitigen Wärmetauscher (35) mit einem beliebigen der Vielzahl von Zwischenwärmetauschern (25) einen Durchgang für das Wärmemedium zu schalten,
wobei die Vielzahl von nutzungsseitigen Wärmetauschern (35) individuell mit einem beliebigen der Vielzahl von Zwischenwärmetauschern (25) verbunden sind, um einen Erwärmungsbetrieb oder einen Kühlungsbetrieb zu ermöglichen;
eine Vielzahl von integrierten Wärmemedium-Strömungsschalteinrichtungen (40), wobei jede der integrierten Wärmemedium-Strömungsschalteinrichtungen (40) durch vollständiges oder teilweises Integrieren jeder der Vielzahl von Wärmemedium-Strömungsschalteinrichtungen (32, 33) ausgebildet sind, **dadurch gekennzeichnet, dass** die Klimaanlage (100) ferner umfasst
eine Vielzahl von einzelnen Antriebseinrichtungen (41), die für jede der integrierten Wärmemedium-Strömungsschalteinrichtungen (40) vorgesehen sind und eingerichtet sind, die jeweilige integrierte Wärmemedium-Strömungsschalteinrichtung (40) anzutreiben, und darin dass
jede der integrierten Wärmemedium-Strömungsschalteinrichtungen einen Ventilkörper (44) aufweist und eingerichtet ist, den Durchgang und eine Strömungsrate des Wärmemediums in Abhängigkeit von einer Drehanschlagposition des Ventilkörpers (44) zu steuern,
wobei jede der einzelnen Antriebseinrichtungen (41) eingerichtet ist, die Drehanschlagposition des Ventilkörpers (44) zu steuern,
wobei jede der integrierten Wärmemedium-Strömungsschalteinrichtungen (40) für jeden der Vielzahl von nutzungsseitigen Wärmetauschern (35) vorgesehen ist, und
wobei jede der integrierten Wärmemedium-Strömungsschalteinrichtungen (40) umfasst:
ein Paar von Wärmemedium-Hauptzuführungsleitungen (42, 43), die für jeden der Vielzahl von Zwischenwärmetauschern (25) vorgesehen sind und als Durchgang zwischen dem Zwischenwärmetauscher (25) und einem beliebigen der Vielzahl von nutzungsseitigen Wärmetauschern (35) dienen,
einen Körper (60) mit einer Ventilkammer (60a), die eine Vielzahl von Paaren von Wärmemedium-Hauptzuführungsleitungen (42, 43) kreuzt, und
wobei der Ventilkörper (44) eine schaftartige Form aufweist und in der Ventilkammer (60a) so angeordnet ist, dass er axial drehbar ist,
wobei der Ventilkörper (44) umfasst:
ein Paar auswahlseitiger Öffnungen (44a, 44b), die in Abhängigkeit von einer Drehanschlagposition des Ventilkörpers (44) mit einem beliebigen der Vielzahl von Paaren von Wärmemedium-Hauptzuführungsleitungen (42, 43) in Verbindung zu bringen sind,
eine inneneinheitsseitige Einlassöffnung (44c), die mit einer Einlassseite eines entsprechenden nutzungsseitigen Wärmetauschers (35) der nutzungsseitigen Wärmetauscher (35) zu verbinden ist, und
eine Vielzahl von inneneinheitsseitigen Auslassöffnungen (44d, 44e), die mit einer Auslassseite des entsprechenden nutzungsseitigen Wärmetauschers (35) der nutzungsseitigen Wärmetauscher (35) in einem Zustand, in dem das Paar von auswahlseitigen Öffnungen (44a, 44b) in Kommunikation mit jedem der Vielzahl der Paare von Wärmemedium-Hauptzuführungsleitungen (42, 43) gehalten wird, in Verbindung zu bringen sind, und,
den dort ausgebildeten Ventilkörper (44),
einen Zuführungsdurchgang (X1), um eine des Paars von auswahlseitigen Öffnungen (44a, 44b) und die inneneinheitsseitige Einlassöffnung (44c) miteinander in Kommunikation zu bringen, und
eine Vielzahl von selektiven Rückführungsdurchgängen (X2, X3) zum Verbinden jeder der Vielzahl von inneneinheitsseitigen Auslassöffnungen (44d, 44e) und einer anderen des Paares von auswahlseitigen Öffnungen (44a, 44b) miteinander.

2. Klimaanlage (100) nach Anspruch 1, wobei
das Paar von auswahlseitigen Öffnungen (44a, 44b) und die Vielzahl von inneneinheitsseitigen Auslassöffnungen (44d, 44e) in einer äußeren Umfangsfläche des Ventilkörpers (44) ausgebildet sind,
die inneneinheitsseitige Einlassöffnung (44c) in einem axialen Endabschnitt des Ventilkörpers (44) ausgebildet ist, und
der Ventilkörper (44) ferner eine adiabatische Wand (61) aufweist, die zwischen dem Zuführungsdurchgang (X1) und der Vielzahl von selektiven Rücklaufdurchgängen (X2, X3) ausgebildet ist.

3. Klimaanlage (100) nach Anspruch 1 oder 2, wobei der Ventilkörper (44) eingerichtet ist, eine Strömungsrate des in den entsprechenden nutzungsseitigen Wärmetauscher (35) der nutzungsseitigen Wärmetauscher (35) strömenden Wärmemediums durch eine Änderung einer kommunizierenden Fläche zwischen dem Paar von auswahlseitigen Öffnungen (44a, 44b) und dem Paar von Wärmemedium-Hauptzuführungsleitungen (42, 43) in Abhängigkeit von der Drehanschlagposition des Ventilkörpers (44) zu steuern.

4. Klimaanlage (100) nach einem der Ansprüche 1 bis 3,
wobei der Ventilkörper (44) eingerichtet ist, den entsprechenden nutzungsseitigen Wärmetauscher (35) der nutzungsseitigen Wärmetauscher (35) von dem Wärmemediumkreislauf (B) zu trennen, indem er an einer Drehanschlagposition anhält, an der das Paar von auswahlseitigen Öffnungen (44a, 44b) nicht in Kommunikation mit irgendeinem der Vielzahl der Paare von Wärmemedium-Hauptzuführungsleitungen (42, 43) gebracht ist.

5. Klimaanlage (100) nach einem der Ansprüche 1 bis 4, ferner umfassend eine erste Kältemittel-Strömungsschalteinrichtung (11),
wobei die Klimaanlage (100) eingerichtet ist zum Betreiben eines Nur-Erwärmung-Betriebsmodus, in dem alle der Vielzahl von Zwischenwärmetauschern (25) als Kondensatoren arbeiten,
eines Nur-Kühlung-Betriebsmodus, in dem alle der Vielzahl von Zwischenwärmetauschern (25) als Verdampfer arbeiten, und
eines Kühlung-und-Erwärmung-Mischbetriebsmodus, in dem einige der Vielzahl von Zwischenwärmetauschern (25) als die Kondensatoren arbeiten und einige andere der Vielzahl von Zwischenwärmetauschern (25) als die Verdampfer arbeiten,
wobei in dem Kühlung-und-Erwärmung-Mischbetriebsmodus, wenn der nutzungsseitige Wärmetauscher (35) der nutzungsseitigen Wärmetauscher (35) entweder von Kühlen auf Erwärmen oder von Erwärmen auf Kühlen geschaltet wird, die Antriebseinrichtung (41), die dem nutzungsseitigen Wärmetauscher (35) der nutzungsseitigen Wärmetauscher (35) entspricht, für den der Betrieb geschaltet wird, angetrieben wird, um den Durchgang für das Wärmemedium zu schalten.

6. Klimaanlage (100) nach einem der Ansprüche 1 bis 5, wobei das wärmequellenseitige Kältemittel irgendeines von einem Einzelkomponentenkältemittel, einem nahezu azeotropen Kältemittelgemisch, einem zeotropen Kältemittelgemisch, einem Kältemittel, das ein natürliches Kältemittel enthält und in zwei Phasen übergeht, und einem Kältemittel, das in einen überkritischen Zustand übergeht, enthält.

7. Klimaanlage (100) nach einem der Ansprüche 1 bis 6, wobei das Wärmemedium eine Gefrierschutzlösung, Wasser, eine Mischung aus der Gefrierschutzlösung und Wasser oder eine Mischung aus Wasser und einem Zusatzstoff mit Korrosionsschutzwirkung umfasst.

8. Klimaanlage (100) nach einem der Ansprüche 1 bis 7, wobei die Antriebseinrichtung (41) einen Schrittmotor umfasst.

## Revendications

1. Appareil de climatisation (100), comprenant :
un circuit de fluide frigorigène (A) formé en connectant un compresseur (10), un échangeur de chaleur côté source de chaleur (12), une pluralité de dispositifs d'expansion (26), et des passages côté fluide frigorigène dans une pluralité d'échangeurs de chaleur intermédiaires (25) par des tuyaux de fluide frigorigène (4) pour permettre au fluide frigorigène côté source de chaleur de circuler à travers ceux-ci ;
une pluralité de circuits de milieu caloporteur (B) formés en connectant une pluralité de pompes (31), une pluralité d'échangeurs de chaleur côté utilisation (35), et des passages côté milieu caloporteur dans la pluralité d'échangeurs de chaleur intermédiaires (25) par des tuyaux de milieu caloporteur (5) pour permettre à un milieu caloporteur de circuler à travers ceux-ci ; et
une pluralité de dispositifs de commutation d'écoulement de milieu caloporteur (32, 33) prévus de manière correspondante à chacun de la pluralité d'échangeurs de chaleur côté utilisation (35), et la pluralité de dispositifs de commutation d'écoulement de milieu caloporteur (32, 33) configurés pour commuter un passage pour le milieu caloporteur en connectant les échangeurs de chaleur côté utilisation (35) à l'un quelconque de la pluralité d'échangeurs de chaleur intermédiaires (25),
la pluralité d'échangeurs de chaleur côté utilisation (35) étant connectés individuellement à l'un quelconque de la pluralité d'échangeurs de chaleur intermédiaires (25) pour permettre une opération de chauffage ou une opération de refroidissement ;
une pluralité de dispositifs intégrés de commutation d'écoulement de milieu caloporteur (40) dans lesquels chacun des dispositifs intégrés de commutation d'écoulement de milieu caloporteur (40) est formé par l'intégration totale ou partielle de chacune de la pluralité de dispositifs de commutation d'écoulement de milieu caloporteur (32, 33), **caractérisé en ce que** le dispositif de climatisation (100) comprend en outre
une pluralité de dispositifs d'entraînement uniques (41) prévus pour chacun des dispositifs intégrés de commutation d'écoulement de milieu caloporteur (40) et configurés pour entraîner les dispositifs intégrés de commutation d'écoulement de milieu caloporteur (40) respectifs, et **en ce que**
chacun des dispositifs intégrés de commutation d'écoulement de milieu caloporteur a un corps de vanne (44), et est configuré pour commander le passage et un débit du milieu caloporteur en fonction d'une position d'arrêt de rotation du corps de vanne (44), dans lequel
chacun des dispositifs d'entraînement unique est configuré pour commander la position d'arrêt de rotation du corps de vanne (44),
dans lequel chacun des dispositifs intégrés de commutation d'écoulement de milieu caloporteur (40) est prévu pour chacun de la pluralité d'échangeurs de chaleur côté utilisation (35), et dans lequel chacun des
dispositifs intégrés de commutation d'écoulement de milieu caloporteur (40) comprend
une paire de tuyaux principaux de distribution de milieu caloporteur (42, 43), qui est fournie à chacun de la pluralité d'échangeurs de chaleur intermédiaires (25), et sert de passage entre l'échangeur de chaleur intermédiaire (25) et l'un quelconque de la pluralité d'échangeurs de chaleur côté utilisation (35),
un corps (60) ayant une chambre de vanne (60a) coupant une pluralité des paires de tuyaux principaux de distribution de milieu caloporteur (42, 43), et
le corps de vanne (44) ayant une forme de tige et étant disposé dans la chambre de vanne (60a) de manière à pouvoir tourner axialement,
le corps de vanne (44) comprend
une paire d'ouvertures côté sélection (44a, 44b) à mettre en communication avec l'une quelconque de la pluralité des paires de tuyaux principaux de distribution de milieu caloporteur (42, 43) en fonction d'une position d'arrêt de rotation du corps de vanne (44),
une ouverture d'entrée côté unité intérieure (44c) à connecter à un côté d'entrée d'un échangeur de chaleur côté utilisation correspondant (35) des échangeurs de chaleur côté utilisation (35), et
une pluralité d'ouvertures de sortie côté unité intérieure (44d, 44e) à mettre en communication avec un côté de sortie de l'échangeur de chaleur côté utilisation correspondant (35) des échangeurs de chaleur côté utilisation (35) dans un état dans lequel la paire d'ouvertures côté sélection (44a, 44b) est maintenue en communication avec chacune de la pluralité des paires de tuyaux principaux de distribution de milieu caloporteur (42, 43), et
le corps de vanne (44) y formé
un passage d'alimentation (X1) pour mettre en communication une des ouvertures de la paire d'ouvertures côté sélection (44a, 44b) et l'ouverture d'entrée côté unité intérieure (44c), et
une pluralité de passages de retour sélectif (X2, X3) pour connecter chacune de la pluralité d'ouvertures de sortie côté unité intérieure (44d, 44e) et l'autre ouverture de la paire d'ouvertures côté sélection (44a, 44b) l'une à l'autre.

2. Appareil de climatisation (100) selon la revendication 1, dans lequel
la paire d'ouvertures côté sélection (44a, 44b) et la pluralité d'ouvertures de sortie côté unité intérieure (44d, 44e) sont formées dans une surface périphérique extérieure du corps de vanne (44),
l'ouverture d'entrée côté unité intérieure (44c) est formée dans une partie d'extrémité axiale du corps de vanne (44), et
le corps de vanne (44) comprend en outre une paroi adiabatique (61) formée entre le passage d'alimentation (X1) et la pluralité de passages de retour sélectif (X2, X3).

3. Appareil de climatisation (100) selon la revendication 1 ou 2, dans lequel le corps de vanne (44) est configuré pour commander un débit du milieu caloporteur s'écoulant dans l'échangeur de chaleur côté utilisation correspondant (35) des échangeurs de chaleur côté utilisation (35) par une modification de la zone de communication entre la paire d'ouvertures côté sélection (44a, 44b) et la paire de tuyaux principaux de distribution de milieu caloporteur (42, 43) en fonction de la position d'arrêt de rotation du corps de vanne (44).

4. Appareil de climatisation (100) de l'une quelconque des revendications 1 à 3,
dans lequel le corps de vanne (44) est configuré pour séparer l'échangeur de chaleur côté utilisation correspondant (35) des échangeurs de chaleur côté utilisation (35) du circuit de milieu caloporteur (B) en s'arrêtant à une position d'arrêt de rotation dans laquelle la paire d'ouvertures côté sélection (44a, 44b) n'est pas mise en communication avec l'une quelconque de la pluralité des paires de tuyaux principaux de distribution de milieu caloporteur (42, 43).

5. Appareil de climatisation (100) de l'une quelconque des revendications 1 à 4, comprenant en outre un premier dispositif de commutation d'écoulement de fluide frigorigène (11),
dans lequel l'appareil de climatisation (100) est configuré pour fonctionner dans un mode de fonctionnement de chauffage exclusif dans lequel tous les échangeurs de chaleur intermédiaires (25) fonctionnent comme des condenseurs,
dans un mode de fonctionnement de refroidissement exclusif dans lequel tous les échangeurs de chaleur intermédiaires (25) fonctionnent comme des évaporateurs, et
dans un mode de fonctionnement mixte de refroidissement et de chauffage dans lequel certains de la pluralité d'échangeurs de chaleur intermédiaires (25) fonctionnent comme des condenseurs et d'autres de la pluralité d'échangeurs de chaleur intermédiaires (25) fonctionnent comme des évaporateurs,
dans lequel, dans le mode de fonctionnement mixte de refroidissement et de chauffage, lorsque l'échangeur de chaleur côté utilisation (35) des échangeurs de chaleur côté utilisation (35) est commuté d'un refroidissement à un chauffage et d'un chauffage à un refroidissement, le dispositif d'entraînement (41) correspondant à l'échangeur de chaleur côté utilisation (35) des échangeurs de chaleur côté utilisation (35) pour lesquels le fonctionnement est commuté et entraîné pour commuter le passage pour le milieu caloporteur.

6. Appareil de climatisation (100) de l'une quelconque des revendications 1 à 5, dans lequel le fluide frigorigène côté source de chaleur comprend l'un quelconque d'un fluide frigorigène à un seul composant, d'un mélange de fluides frigorigènes quasi-azéotropes, d'un mélange de fluides frigorigènes zéotropes, d'un fluide frigorigène avec un changement à deux phases comprenant un fluide frigorigène naturel, et d'un fluide frigorigène qui passe à un état supercritique.

7. Appareil de climatisation (100) de l'une quelconque des revendications 1 à 6, dans lequel le milieu caloporteur comprend l'un quelconque d'une solution antigel, d'eau, d'un mélange de la solution antigel et d'eau, et d'un mélange d'eau et d'un additif ayant un effet anticorrosif.

8. Appareil de climatisation (100) de l'une quelconque des revendications 1 à 7, dans lequel le dispositif d'entraînement (41) comprend un moteur pas à pas.
